(19) **Europäisches Patentamt / European Patent Office / Office européen des brevets**

(11) **EP 1 362 255 B1**

(12) **FASCICULE DE BREVET EUROPEEN**

(45) Date de publication et mention
de la délivrance du brevet:
**03.01.2007 Bulletin 2007/01**

(51) Int Cl.:
*G02B 13/06* (2006.01)    *G02B 15/10* (2006.01)
*G03B 37/02* (2006.01)

(21) Numéro de dépôt: **02704809.9**

(22) Date de dépôt: **13.02.2002**

(86) Numéro de dépôt international:
**PCT/FR2002/000537**

(87) Numéro de publication internationale:
**WO 2002/067016 (29.08.2002 Gazette 2002/35)**

(54) **DISPOSITIF SUPPORT D'APPAREIL PHOTOGRAPHIQUE**

HALTEVORRICHTUNG FÜR EINE FOTOKAMERA

PHOTOGRAPHIC CAMERA SUPPORT DEVICE

(84) Etats contractants désignés:
**AT BE CH CY DE DK ES FI FR GB GR IE IT LI LU MC NL PT SE TR**

(30) Priorité: **16.02.2001 FR 0102149**

(43) Date de publication de la demande:
**19.11.2003 Bulletin 2003/47**

(73) Titulaire: **6115187 Canada Inc.**
**Saint-Laurent,**
**Quebec H4M 2P1 (CA)**

(72) Inventeurs:
• **ARTONNE, Jean-Claude**
**H2H 1R1 MONTREAL QUEBEC (CA)**
• **MOUSTIER, Christophe**
**F-13012 MARSEILLE (FR)**

(74) Mandataire: **Marchand, André**
**OMNIPAT,**
**24 Place des Martyrs de la Résistance**
**13100 Aix-en-Provence (FR)**

(56) Documents cités:
**WO-A-00/58787          WO-A-98/27457**

• **PATENT ABSTRACTS OF JAPAN vol. 018, no. 067 (P-1686), 3 février 1994 (1994-02-03) -& JP 05 281633 A (FUJI PHOTO FILM CO LTD), 29 octobre 1993 (1993-10-29)**
• **PATENT ABSTRACTS OF JAPAN vol. 1996, no. 03, 29 mars 1996 (1996-03-29) -& JP 07 306486 A (CANON INC), 21 novembre 1995 (1995-11-21)**

## Description

La présente invention concerne la photographie numérique et notamment la réalisation de photographies grand angle, ainsi que la transformation de photographies grand angle en images panoramiques numériques.

La présente invention concerne également la présentation d'images panoramiques numériques sur un écran, et la visite virtuelle de lieux au moyen d'images panoramiques.

Ces dernières années, les progrès rapides de la micro-informatique et des techniques de fabrication des appareils photographiques numériques ont été à l'origine d'un important développement de la photographie numérique et de son accessibilité au public.

Parmi les diverses applications offertes par la photographie numérique, la présentation d'images panoramiques à 360° sur les écrans d'ordinateurs connaît un essor important car cette technique permet de réaliser des visites virtuelles de lieux à partir d'un simple écran d'ordinateur offrant un angle de vision réduit, l'observateur pouvant au moyen d'un pointeur d'écran faire glisser l'image présentée à l'écran vers la gauche, la droite, le haut ou le bas, jusqu'à atteindre les limites de l'image panoramique. Ces images panoramiques sont généralement d'un aspect sphérique ou cylindrique, de sorte que l'observateur peut au moins effectuer un tour complet dans le plan horizontal de l'image en revenant à son point de départ. Les images sphériques permettent en outre d'effectuer un tour complet dans le plan vertical. Par ailleurs, la prévision de liens de type hyper-ancre entre deux images panoramiques permet à l'observateur de passer d'une image à une autre par un simple "clic" de souris sur une zone active présente dans l'image, la zone active correspondant généralement à un objet présent sur l'image, par exemple une porte, une fenêtre,...

Divers exemples d'images panoramiques et de visites virtuelles sont présentés sur de nombreux sites Web. On pourra notamment se reporter au site "http://www.panoguide.com" ("the guide to panoramas and panoramic photography") qui donne un aperçu exhaustif .de l'ensemble des produits à la disposition du public, depuis le matériel photographique jusqu'aux logiciels permettant de former des images panoramiques à 360° par assemblage de photographies grand angle, de corriger la teinte des images, de réaliser des zones actives permettant de chaîner des images panoramiques,... De tels logiciels, qui mettent en oeuvre des algorithmes mathématiques de traitement d'images numériques, sont proposés au public sous forme de programmes téléchargeables sur Internet ou de CD-ROM disponibles dans le commerce.

A ce jour, ces techniques d'obtention d'images panoramiques numériques et de visite virtuelle, malgré leur accessibilité croissante au public et l'engouement qu'elles suscitent, présentent divers inconvénients qui seront exposés dans ce qui suit.

## Inconvénients relatifs au matériel de photographie

Il est rappelé ici que l'obtention d'une image panoramique numérique à 360° nécessite généralement la réalisation d'au moins deux photographies à 180° (ou de N photographies faites avec un angle de 360°/N) au moyen d'un objectif panoramique et d'une tête panoramique, les objectifs à 360° étant coûteux et présentant un angle de prise de vue réduit dans le plan vertical. Une telle tête panoramique comprend une partie montée rotative qui reçoit l'appareil photographique et qui comprend des moyens de réglage de la position de l'appareil, grâce auxquels on peut obtenir, après divers réglages, l'alignement du plan nodal de l'objectif et de l'axe de rotation de la tête panoramique, ce qui est indispensable pour éviter les erreurs de parallaxe. Or, un tel alignement n'est pas aisé à obtenir et nécessite divers réglages et essais. De plus, les têtes panoramiques sont des instruments de précision d'un prix non négligeable.

D'autre part, les appareils photographiques numériques de type SLR("Single Lens Reflex") peuvent recevoir tout type d'objectif mais sont coûteux et peu accessibles au grand public, qui se tourne généralement vers les appareils photographiques numériques de type compact, c'est à-dire à objectif fixe. Pour pallier l'inconvénient que constitue l'inamovibilité de l'objectif des appareils compacts, certains fabricants proposent des objectifs appelés "adaptateurs" ("conversion lens") parmi lesquels on trouve des adaptateurs panoramiques ("fisheye conversion lens" ou "fisheye converters") et des adaptateurs du type téléobjectif ("tele converter lens"). Ces adaptateurs peuvent être vissés directement sur l'objectif fixe de l'appareil compact, la lentille arrière de l'adaptateur se trouvant alors en regard de la lentille avant de l'objectif fixe, et permettent au détenteur d'un appareil compact de réaliser des photographies grand angle. Malheureusement, de tels adaptateurs ne sont pas universels et de nombreux appareils photographiques compacts ne peuvent les recevoir, n'étant pas pourvus du filetage nécessaire.

Ainsi, un objectif de la présente invention est de prévoir un procédé et un dispositif support d'appareil photographique permettant de réaliser une photographie grand angle au moyen d'un appareil photographique numérique de type compact, y compris un appareil photographique compact ne comprenant pas de moyen de fixation d'un adaptateur panoramique.

Un autre objectif de la présente invention est de prévoir un procédé et un dispositif facilitant la réalisation de photographies grand angle sans erreur de parallaxe, sans nécessiter les habituels et délicats réglages de la position de l'appareil visant à obtenir un bon alignement entre l'axe de rotation de l'appareil et le plan nodal de la lentille frontale de l'objectif panoramique.

Un autre objectif de la présente invention est de prévoir un dispositif support d'appareil qui soit d'une structure simple et d'un prix de revient réduit.

**Inconvénients relatifs aux disparités de teinte entre les images panoramiques**

Un autre inconvénient des techniques susmentionnées concerne la correction des teintes des images panoramiques obtenues par assemblage de photographies grand angle.

Rappelons ici qu'après avoir réalisé au moins deux photographies numériques grand angle, les fichiers photographiques délivrés par le capteur d'image de l'appareil photographique doivent être transférés dans un micro-ordinateur équipé d'un logiciel exécutant des algorithmes de conversion d'image. De tels algorithmes transfèrent les points image de chaque photographie dans un système de coordonnées à trois dimensions, du type sphérique, cubique, cylindrique, polyédrique, etc.. Après le transfert, on dispose de deux images semi-panoramiques, par exemple deux images en demi-sphères, qui sont assemblées pour obtenir une image panoramique totale, c'est-à-dire à 360°.

Bien que les appareils photographiques numériques effectuent une balance des blancs et une correction de la luminosité (correction de gamma), les conditions de prise de vue diffèrent selon que l'on se trouve face au soleil ou dos au soleil et, pour les photographies effectuées en intérieur, en fonction des sources de lumière présentes (néons, fenêtres, etc.). En conséquence, chacune des images semi-panoramique présente une teinte dominante qui lui est propre, ce qui apparaît nettement dans l'image panoramique finale, par exemple sous la forme d'une brusque variation de teinte entre la première et la deuxième demi-sphère dans le cas d'une image panoramique sphérique.

Une solution classique à ce problème consiste à effectuer un recalage des couleurs d'une demi-sphère en se référant à l'autre demi-sphère. Un tel recalage comprend une étape de détermination du gamma des couleurs primaires de la première demi-sphère dans les zones de recouvrement ou de jointure avec la seconde demi-sphère, faite en se référant à l'intensité des couleurs primaires des points de la seconde demi-sphère. L'étape suivante consiste à appliquer une correction de gamma à tous les points de la première demi-sphère. On obtient alors une teinte dominante constante sur l'ensemble de l'image panoramique.

Malheureusement, une telle correction de teinte ne présente qu'une valeur relative et le problème de disparité des teintes réapparaît lorsque l'on compare deux images panoramiques, chaque image présentant une teinte générale qui, bien qu'étant homogène grâce au procédé susmentionné, est différente de celle de l'image suivante. Ce problème apparaît nettement lorsque plusieurs images panoramiques sont chaînées dans le cadre d'une visite virtuelle d'un lieu, et se traduit par de fortes variations de teinte lorsque l'observateur passe d'une image panoramique à l'autre.

Ainsi, encore un autre objectif de la présente invention est de prévoir un moyen et un procédé de correction de teinte permettant d'homogénéiser là teinte de plusieurs images panoramiques numériques.

**Inconvénients relatifs à l'orientation des images panoramiques lors d'une visite virtuelle**

Un autre problème des techniques susmentionnées, apparaissant dans le cadre d'une visite virtuelle, est que l'observateur est sujet à un phénomène de désorientation lors d'une transition d'une image panoramique à l'autre, car il se trouve dépourvu d'un référentiel commun entre les différents panoramiques. Ce phénomène est particulièrement sensible dans le cadre d'une visite virtuelle d'un lieu comprenant plusieurs pièces contiguës représentées chacune par une ou plusieurs images panoramiques. Considérons par exemple trois pièces contiguës comprenant chacune une porte d'accès à chacune des deux autres pièces, et trois images panoramiques représentant respectivement chacune des pièces et comprenant chacune deux zones actives définies dans les régions correspondant aux portes. Le problème qui se pose est de définir la portion d'image panoramique à afficher sur l'écran lorsque l'observateur pénètre dans une image panoramique.

Une solution connue consiste à définir un angle d'orientation par défaut qui est constant quel que soit le point d'entrée dans l'image panoramique. Si l'on reprend l'exemple cité ci-dessus, cela signifie que la portion de pièce présentée à l'écran est constante quelle que soit la porte par laquelle on y est entré. Il est donc évident que cette solution présente l'inconvénient de désorienter l'observateur.

Une autre solution connue consiste à définir plusieurs angles d'orientation par défaut, choisis de façon dynamique en fonction du point d'entrée dans l'image panoramique, c'est-à-dire en fonction de la zone active sélectionnée dans l'image panoramique précédente. Cette solution présente l'inconvénient d'être complexe à mettre en oeuvre. Elle nécessite l'établissement d'une cartographie des lieux et la détermination d'un angle d'orientation pour chaque lien hyper-ancre prévu entre deux images.

Ainsi, encore un autre objectif de la présente invention est de prévoir un moyen et un procédé pour orienter une image panoramique numérique.

Encore un autre objectif de la présente invention est de prévoir un procédé d'affichage d'une image panoramique numérique dans lequel l'orientation de l'image est déterminée de façon dynamique sans qu'il soit nécessaire de chaîner les diverses images panoramiques.

Au moins un objectif de la présente invention est atteint par la prévision d'un dispositif support d'appareil photographique comprenant : des moyens de fixation d'un appareil photographique équipé ou pouvant être équipé d'un premier objectif, des moyens de rotation autour d'un axe, et des moyens de fixation d'un objectif adaptateur, notamment un objectif adaptateur panoramique, agencés pour maintenir l'objectif adaptateur dans l'alignement du premier objectif sans qu'il soit nécessaire de fixer l'objectif adaptateur à l'appareil photographique.

Selon un mode de réalisation, les moyens de fixation d'un appareil photographique et les moyens de fixation d'un objectif adaptateur sont agencés pour maintenir l'objectif adaptateur dans une position telle que l'axe de rotation du dispositif support se trouve sensiblement dans le plan nodal de la lentille frontale de l'objectif adaptateur.

Selon un mode de réalisation, le dispositif comprend un système à rappel élastique pour pousser l'objectif adaptateur dans une direction correspondant à l'emplacement de la lentille frontale du premier objectif.

Selon un mode de réalisation, le dispositif comprend une pièce mobile et des moyens de fixation de l'objectif adaptateur à la pièce mobile, la pièce mobile étant montée coulissante et poussée par un moyen élastique dans une direction correspondant à l'emplacement de la lentille frontale du premier objectif.

Selon un mode de réalisation, la pièce mobile est un fourreau recevant tout ou partie de l'objectif adaptateur.

Selon un mode de réalisation, la pièce mobile comprend sur sa face arrière une excroissance ou un bourrelet destiné à venir au contact d'une partie périphérique frontale du premier objectif, de manière que la lentille arrière de l'objectif adaptateur et la lentille frontale du premier objectif ne soient pas en contact.

Selon un mode de réalisation, le dispositif comprend un guide optique pour amener une lumière frontale jusqu'à une cellule photosensible de l'appareil photographique.

Selon un mode de réalisation, le dispositif comprend une boussole agencée dans un plan sensiblement inférieur à la zone de fixation de l'objectif adaptateur, de manière à apparaître dans la partie inférieure d'une prise de vue lorsque l'objectif adaptateur est un objectif panoramique.

Selon un mode de réalisation, la boussole comprend un cadran de couleur artificielle destinée à être distinguée des couleurs naturelles d'une prise de vue au cours d'une analyse d'image par ordinateur visant à trouver l'emplacement de la boussole dans une image.

Selon un mode de réalisation, la boussole comprend une aiguille comprenant sur une première moitié nord ou sud une couleur présentant un contraste élevé relativement à la couleur du cadran et sur une seconde moitié sud ou nord une couleur sensiblement identique à la couleur du cadran, afin d'être distinguée du cadran au cours d'une analyse d'image par ordinateur visant à trouver l'emplacement de l'aiguille.

Selon un mode de réalisation, la boussole présente une partie centrale de couleur sombre de sorte que le cadran de la boussole forme un anneau coloré dont la forme facilite la détection du cadran au cours d'une analyse d'image par ordinateur visant à trouver l'emplacement du cadran.

Selon un mode de réalisation, le dispositif comprend une languette agencée dans un plan sensiblement inférieur à la zone de fixation de l'objectif adaptateur, et des moyens pour agencer la languette soit dans une position visible où la languette apparaît dans la partie inférieure d'une prise de vue lorsque l'objectif adaptateur est un objectif panoramique, soit dans une position masquée où la languette n'apparaît pas dans la prise de vue.

Selon un mode de réalisation, la languette s'étend au-dessus d'un cadran de boussole et présente une couleur offrant un contraste élevé relativement à une couleur de cadran afin de faciliter la détection de la languette au cours d'une analyse d'image par ordinateur visant à trouver l'emplacement de la languette.

Selon un mode de réalisation, la languette est montée rotative autour d'un axe coaxial à l'axe de rotation du dispositif support.

Selon un mode de réalisation, le dispositif comprend une pièce d'étalonnage de couleurs comprenant au moins trois échantillons de couleurs, agencée dans un plan sensiblement inférieur au plan de fixation de l'objectif adaptateur et apparaissant dans la partie inférieure d'une prise de vue lorsque l'objectif adaptateur est un objectif panoramique.

Selon un mode de réalisation, la pièce d'étalonnage de couleurs est circulaire et concentrique au cadran d'une boussole.

La présente invention concerne également un kit de photographie pour la réalisation de photographies grand angle, comprenant : un dispositif support d'appareil photographique selon l'invention, pourvu d'un axe de rotation, un appareil photographique équipé ou pouvant être équipé d'un premier objectif, et un objectif adaptateur panoramique, le dispositif support étant conformé pour que le plan nodal de la lentille frontale de l'objectif adaptateur soit sensiblement aligné avec l'axe de rotation du dispositif support sans qu'il soit nécessaire de procéder à un réglage particulier ou à des essais de correction d'erreurs de parallaxe.

La présente invention concerne également un procédé pour la réalisation de photographies grand angle au moyen d'un appareil photographique équipé ou pouvant être équipé d'un premier objectif et au moyen d'un objectif adaptateur panoramique, comprenant les étapes consistant à : prévoir un dispositif support de l'appareil photographique comprenant des moyens de rotation autour d'un axe, des moyens de fixation de l'appareil photographique et des moyens de fixation de l'objectif adaptateur, les moyens de fixation de l'objectif adaptateur étant agencés pour maintenir l'objectif adaptateur dans l'alignement du premier objectif sans qu'il soit nécessaire de fixer l'objectif adaptateur à l'appareil photographique, fixer l'appareil photographique sur le dispositif support, et fixer l'objectif adaptateur sur le dispositif support.

Selon un mode de réalisation, le procédé comprend une étape consistant à équiper le dispositif support d'un système à rappel élastique pour pousser l'objectif adaptateur dans une direction correspondant à l'emplacement de la lentille frontale du premier objectif.

De préférence, le dispositif support est conformé de manière que l'axe de rotation du dispositif support se trouve sensiblement dans le plan nodal de la lentille frontale de l'objectif adaptateur.

Le procédé selon l'invention peut également comprendre diverses autres étapes consistant à équiper le dispositif support des moyens prévus par la présente invention et décrits ci-dessus.

Ces objets, caractéristiques et avantages ainsi que d'autres de la présente invention seront exposés plus en détail dans la description suivante d'un dispositif support d'appareil photographique selon l'invention, d'un procédé selon l'invention d'orientation d'une image panoramique numérique, d'un procédé selon l'invention de correction de la teinte d'une image panoramique numérique, et d'un procédé selon l'invention d'affichage sur un écran d'une image panoramique numérique, faite à titre non limitatif en relation avec les figures jointes parmi lesquelles :

- la figure 1 est une vue en coupe d'un mode de réalisation d'un dispositif support d'appareil photographique selon l'invention,
- la figure 2 est une vue de dessus du dispositif support de la figure 1,
- la figure 3 est une vue de face du dispositif support de la figure 1,
- la figure 4 est une vue en perspective du dispositif support de la figure 1,
- la figure 5 est une vue éclatée d'un élément du dispositif support de la figure 1,
- la figure 6 est une vue rapprochée du dispositif support montrant une boussole et une pièce d'étalonnage de couleurs,
- la figure 7 est une vue en coupe de la boussole et de la pièce d'étalonnage de couleurs,
- la figure 8 est un exemple de photographie grand angle réalisée au moyen d'un appareil photographique agencé sur un dispositif support selon l'invention,
- la figure 9 est un organigramme décrivant des étapes d'obtention d'une image panoramique numérique, d'orientation de l'image panoramique et de correction de la teinte de l'image panoramique numérique,
- les figures 10A et 10B représentent schématiquement une image panoramique numérique de type sphérique et illustrent respectivement une étape du procédé d'orientation d'image selon l'invention et une étape du procédé de correction de teinte selon l'invention,
- les figures 11A et 11B représentent schématiquement un lieu clos et illustrent un procédé selon l'invention d'affichage d'images panoramiques,
- la figure 12 est un organigramme décrivant un mode de réalisation du procédé d'affichage selon l'invention, et
- la figure 13 représente un système de vidéosurveillance et illustre une application de la présente invention.

## I - Description d'un dispositif support d'appareil photographique selon l'invention

### a - Aspects principaux du dispositif support

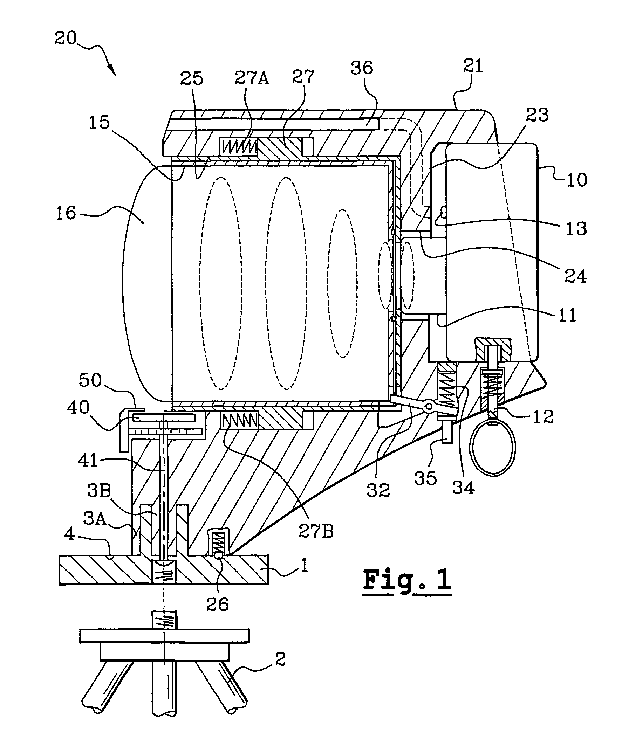

Les figures 1 à 4 représentent respectivement par une vue en coupe, une vue de dessus, une vue de face et une vue en perspective un exemple de réalisation d'un dispositif 20 selon l'invention, destiné à servir de support à un appareil photographique compact et représenté ici avec un tel appareil.

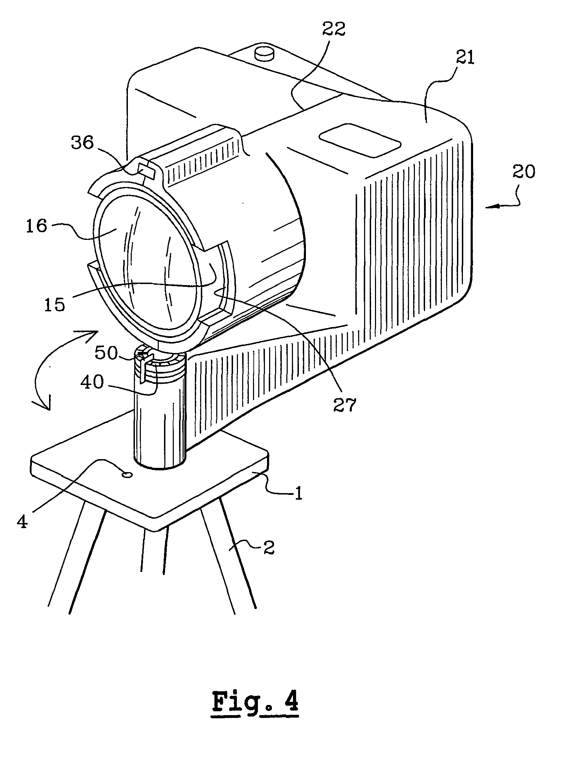

Le dispositif support 20 comprend un corps 21 monté rotatif sur une base 1 fixée sur un trépied 2. Le corps 21 est réalisé ici par soudure ou collage de deux coquilles en matière plastique moulée, la ligne 22 d'assemblage des deux pièces apparaissant en figure 4. En référence à la figure 1, la partie arrière du corps 21 présente un logement 23 recevant ici un appareil photographique numérique 10 de type compact, comprenant un objectif 11 non amovible ou objectif "fixe". A l'avant du logement 23 se trouve une cavité cylindrique 24 recevant l'objectif 11 et débouchant sur une autre cavité cylindrique 25 de plus grand diamètre, qui débouche à l'avant du corps 21. L'appareil photographique 10 est verrouillé dans le logement 23 au moyen d'une goupille 12 vissée dans un orifice de fixation prévu sur la face inférieure de l'appareil 10, un tel orifice étant en soi classique. La rotation du dispositif 20 sur la base 1 est assurée par une pièce tubulaire 3A solidaire de la base 1 et orientée vers le haut, recevant une partie cylindrique 3B formée dans la partie inférieure du corps 21. La partie inférieure du corps 21, qui s'étend autour de la pièce tubulaire 3A, présente une face inférieure sensiblement parallèle à la base 1 pourvue d'une bille 26 montée captive dans une cavité, la bille 26 étant poussée par un ressort contre la base 1. La bille 26 coopère avec une cavité 4 pratiquée sur la base 1, l'ensemble formant un système de blocage du corps 21 dans une position angulaire déterminée autour de l'axe 3B. Au moins deux cavités 4 sont pratiquées sur la base 1 de part et d'autre de l'axe de rotation 3B pour permettre de bloquer le corps 21 dans deux positions angulaires décalées de 180°, en vue de la réalisation de deux photographies panoramiques complémentaires permettant d'obtenir, après numérisation et assemblage des photographies, une image panoramique numérique à 360°.

Par ailleurs, la cavité cylindrique 25 pratiquée dans la partie avant du corps 21 reçoit une pièce 27 permettant la fixation d'un objectif 15 du type adaptateur panoramique ("panoramic converter lens"). Un tel adaptateur panoramique 15 est prévu pour coopérer avec l'objectif fixe 11 de l'appareil photographique pour former un groupe optique offrant un angle de prise de vue de l'ordre de 360°, de préférence sensiblement supérieur à 360° et de l'ordre de 363°. Comme cela apparaît sur les diverses figures, la pièce de fixation 27 maintient l'adaptateur panoramique 15 en regard de l'objectif fixe 11 et dans l'alignement de celui-ci sans qu'il soit nécessaire de le fixer à l'appareil photographique.

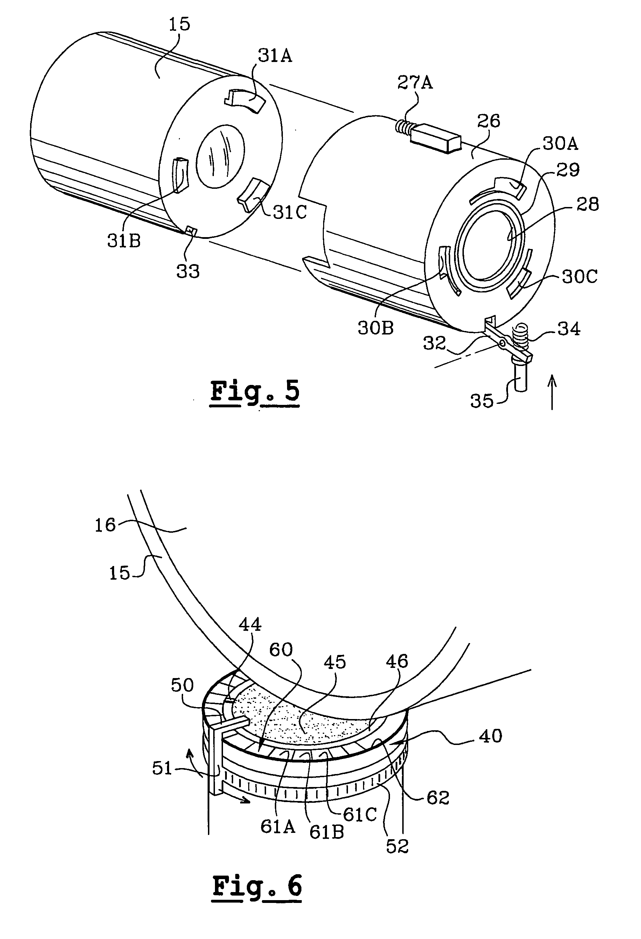

La pièce de fixation 27 est montée coulissante dans la cavité 25 et est poussée par des ressorts 27A, 27B en direction de l'objectif fixe 11. Comme cela apparaît sur la vue éclatée de la figure 5, la pièce 27 est ici un cylindre creux formant un fourreau dans lequel l'adaptateur panoramique 15, de forme correspondante, est agencé. Le fond de la pièce 27, se trouvant en regard de la lentille frontale de l'objectif fixe 11, présente une paroi dans laquelle a été pratiqué un orifice 28 assurant le passage de la lumière entre l'adaptateur panoramique 15 et l'objectif fixe 11. L'orifice 28 est entouré par une pièce annulaire 29 de faible diamètre, par exemple en feutre ou en caoutchouc, fixée sur la face arrière de la paroi. La pièce annulaire 29 vient au contact de la partie périphérique de l'objectif fixe 10, qui est en matière plastique, et joue le rôle d'amortisseur et d'entretoise. Ainsi, lorsque l'adaptateur panoramique 15 est engagé au fond de la pièce 27 et que la pièce 27 est plaquée contre l'objectif 11 par les ressorts 27A, 27B, la lentille arrière de l'adaptateur panoramique 15 ne vient pas au contact de la lentille avant de l'objectif 11, ce qui évite de rayer les deux lentilles.

La pièce 27 et l'adaptateur panoramique 15 sont pourvus d'un système de verrouillage de type universel, ici un système à baïonnette, permettant d'agencer dans la pièce 27 d'autres types d'adaptateur, par exemple un télé-adaptateur ("tele converter lens"). Ainsi, on voit en figure 5 que le fond de la pièce 27 présente trois ouvertures 30A, 30B, 30C prévues pour recevoir trois pièces 31A, 31B, 31C formant crochets solidaires de la face arrière de l'adaptateur panoramique 15, le verrouillage s'opérant de façon classique par insertion et rotation de l'adaptateur panoramique 15 dans la pièce 27. Le dispositif support comporte en outre une pièce 32 formant levier dont une extrémité coopère avec une encoche 33 pratiquée sur un bord de l'adaptateur panoramique 1, par l'intermédiaire d'une fente pratiquée sur un bord de la pièce 27. Sur la figure 1, il apparaît que la pièce 32 est maintenue dans une position de blocage par un ressort 34 et peut basculer dans une position de libération de l'adaptateur panoramique 15 par action sur un bouton poussoir 35.

Le corps 21 du dispositif support comprend également un conduit de lumière 36 pourvu d'une fibre optique, débouchant sur la face avant du corps 21 et permettant d'amener une lumière frontale jusqu'à une cellule photoélectrique 13 de l'appareil photographique 10.

Selon une caractéristique optionnelle mais avantageuse de la présente invention, le plan nodal de la lentille frontale 16 de l'adaptateur panoramique 15 se trouve naturellement dans l'alignement de l'axe de rotation 3B du dispositif lorsque l'adaptateur 15 est verrouillé dans la pièce 27 et que cette dernière est en butée contre l'objectif 11. On désigne ici par "plan nodal" un plan comprenant les points nodaux de la lentille, dont l'alignement avec l'axe de rotation doit être assuré pour éviter les erreurs de parallaxe, comme cela est bien connu de l'homme de l'art. En pratique, ce résultat est obtenu par un agencement de l'axe de rotation 3B à l'avant du corps 21, en tenant compte, au moment de la conception du corps 21, de la longueur de l'adaptateur panoramique 15 et de la longueur de la lentille fixe 11.

Il en résulte que le dispositif support 20 selon l'invention, associé avec l'adaptateur panoramique 15 et avec un appareil photographique numérique de type compact, peut être utilisé par des personnes non expérimentées pour réaliser des photographies panoramiques, sans réglage d'alignement ni essais visant à déceler les erreurs de parallaxe. Il en résulte également un faible prix de revient du dispositif support selon l'invention, qui ne dispose pas des coûteux mécanismes gradués que l'on trouve sur les têtes panoramiques classiques. De ce fait, l'ensemble formé par l'adaptateur panoramique et le dispositif support peut être commercialisé sous la forme d'un kit d'un prix de vente réduit, accessible à la majorité du public.

En outre, le dispositif support selon l'invention peut s'adapter à tout type d'appareil numérique compact, y compris les appareils compacts qui ne sont pas prévus pour recevoir un adaptateur panoramique. Le faible prix de revient du dispositif selon l'invention permet de prévoir un corps 21 différent pour chaque type d'appareil compact présent sur le marché, tout en conservant un adaptateur panoramique 15 commun à tous les modes de réalisation.

Le dispositif support qui vient d'être décrit est bien entendu susceptible de diverses variantes de réalisation à la portée de l'homme de l'art, pouvant porter sur la plupart des caractéristiques particulières du mode de réalisation qui vient d'être décrit, tout en restant dans le cadre de la présente invention. Notamment, une variante de réalisation permettant de réduire encore plus le prix de revient du dispositif consiste à fixer l'adaptateur panoramique 15 de façon définitive sur le corps 21, sans prévision de la pièce 27. Un mode de réalisation exclusivement dédié à la photographie grand angle peut ainsi être prévu. Dans un tel mode de réalisation, l'adaptateur panoramique est monté de façon coulissante et est poussé par un système à ressort dans une position de butée arrière où il se trouve en regard et dans l'alignement de l'objectif fixe de l'appareil photographique.

D'autre part, la position de butée de l'adaptateur panoramique peut être obtenue de diverses manières, autres qu'un contact avec l'objectif fixe, notamment au moyen d'une butée fixe au fond du logement recevant l'adaptateur panoramique.

On notera ici que certains appareils photographiques numériques compacts présentent des objectifs fixes mais motorisés, le terme "fixe" désignant ici le caractère inamovible de l'objectif. Comme de tels objectifs motorisés sont susceptibles d'avancer lors d'un réglage de distance focale, la prévision d'un moyen élastique assurant un contact souple entre l'adaptateur panoramique et l'objectif fixe permet d'éviter toute détérioration de l'objectif fixe ou de l'adaptateur en cas de déplacement inopiné vers l'avant de l'objectif fixe. Sur les autres appareils photographiques compacts, la motorisation assurant le réglage de la distance focale est appliquée au système de lentille qui se déplace à l'intérieur de l'objectif fixe, dont la longueur externe reste ainsi constante.

Le dispositif support 20 représenté sur les figures 1 à 4 présente d'autres caractéristiques qui seront décrites dans ce qui suit. Ces caractéristiques additionnelles sont en soi indépendantes des précédentes et sont ainsi susceptibles d'être appliquées à d'autres supports d'appareil photographique, notamment les têtes panoramiques classiques. Ces caractéristiques additionnelles sont prévues en relation avec des aspects de la présente invention se rapportant au traitement d'une image numérique, notamment un procédé d'orientation d'images panoramiques numériques et un procédé de correction de teinte qui seront décrit plus loin.

**b - Aspects du dispositif support concernant l'obtention d'images panoramiques orientées**

Si l'on se réfère à nouveau à la figure 1, on voit que le corps 21 présente, sous la lentille frontale 16 de l'adaptateur panoramique, une région sensiblement en retrait se trouvant à la verticale de l'axe de rotation 3B, formant une sorte d'évidement où sont agencés des éléments additionnels. Ces éléments additionnels comprennent une boussole 40 et une languette 50 fixées à l'extrémité d'une tige verticale 41 coaxiale à l'axe de rotation 3B, la tige 41 n'étant pas solidaire en rotation du corps 21. La tige 41, vissée ici dans la base 1, traverse la base 1 ainsi que l'axe cylindrique 3B du corps 21 pour atteindre la région se trouvant sous la lentille frontale 16.

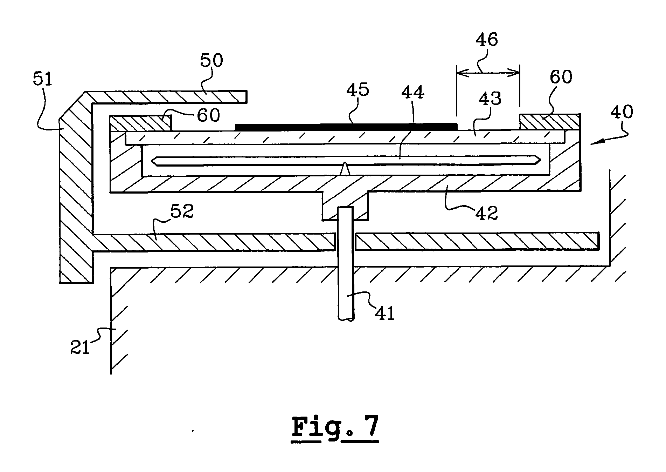

Ces éléments sont représentés plus en détail sur la figure 7. La boussole 40 comprend un boîtier 42 recouvert par un verre 43 et portant une aiguille magnétisée 44. La languette 50 est agencée horizontalement et parallèlement au verre 43, et s'étend au-dessus de la boussole. La languette 50 est portée par un bras 51 qui longe le bord du boîtier 42. La partie inférieure du bras 51 est fixée à un disque 52 agencé sous le boîtier 42 et monté rotatif autour de la tige 41.

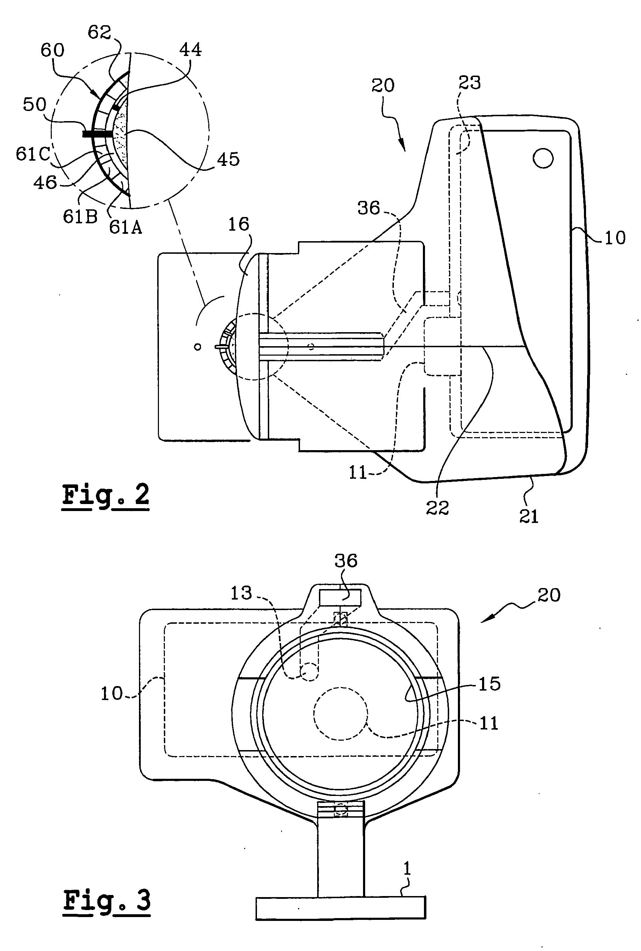

Le fond du boîtier 42 présente de préférence une couleur artificielle se distinguant des couleurs naturelles d'une prise de vue, par exemple du jaune fluorescent. Une moitié de l'aiguille 44, par exemple la moitié nord, présente une couleur offrant un contraste élevé par rapport à la couleur du cadran, par exemple du rouge, tandis que l'autre moitié de l'aiguille présente de préférence la même couleur que le cadran. La languette 50 présente elle-même une couleur offrant un contraste élevé par rapport à la couleur du cadran, tout en étant différente de celle de l'aiguille, par exemple du bleu, l'aiguille 44 et la languette 50 constituant chacune un repère d'orientation destiné à être photographié lors d'une prise de vue. Enfin, la partie centrale du cadran présente une couleur sombre, de préférence noire, obtenue ici par collage d'un disque de papier noir 45 sur le verre 43. Ainsi, comme on le voit en figure 2, le cadran 46 de la boussole vu de dessus a l'aspect d'un anneau coloré, ici un anneau jaune, coupé dans le sens radial par un trait rouge (moitie nord de l'aiguille 44) et par un trait vert (languette 50).

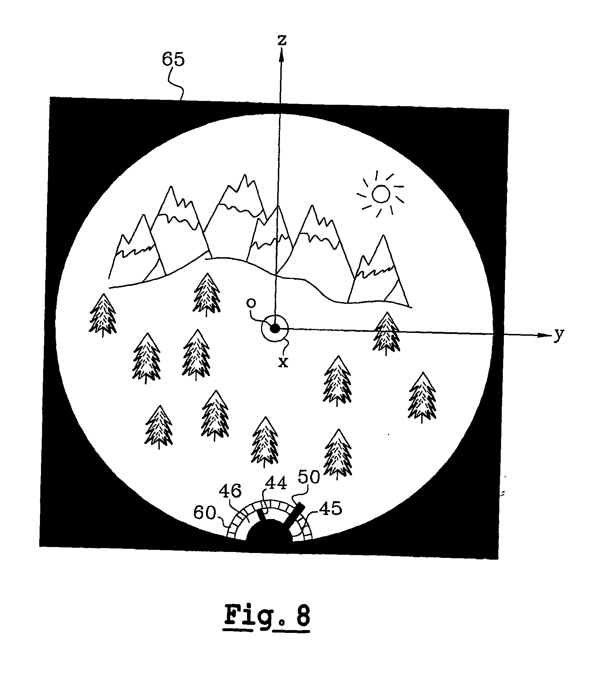

La figure 8 représente schématiquement une photographie panoramique 65 réalisée au moyen du dispositif support selon l'invention. La partie utile de cette photographie est classiquement de forme circulaire et la photographie présente des bords sombres qui seront supprimés ultérieurement lorsque l'image sera numérisée. Le cadran 46 de la boussole étant coaxial à l'axe de rotation 3B et dans l'alignement du plan nodal de la lentille frontale 16 de l'adaptateur panoramique, une moitié de cadran apparaît dans chaque photographie panoramique réalisée, quelle que soit la position angulaire du corps relativement à la base. On aperçoit ainsi sur le bord inférieur de la photographie un anneau de couleur jaune (cadran 46). L'anneau de couleur jaune est ici coupé dans le sens radial par un trait rouge (moitié nord de l'aiguille 44) et par un trait vert (languette 50), ce qui signifie que la photographie a été prise sensiblement en direction du nord et/ou que l'utilisateur n'a pas cherché à dissimuler la languette.

En référence à la figure 6, le "mode d'emploi" recommandé du dispositif selon l'invention est le suivant : l'utilisateur choisit le point de vue à partir duquel il veut réaliser deux photographies complémentaires, prend une première photographie, fait pivoter l'appareil photographique de 180° et prend une seconde photographie. Si le champ magnétique terrestre est présent et que l'aiguille de la boussole s'oriente naturellement au Nord, l'utilisateur doit de préférence faire tourner la languette 50 autour de son axe de manière que celle-ci n'apparaisse pas sur la photographie. Si, au contraire, l'utilisateur se trouve en un lieu où le champ magnétique terrestre est atténué et n'oriente pas correctement l'aiguille de la boussole, l'utilisateur choisi une direction arbitraire et maintient la languette 50 dans cette direction à chaque prise de vue et à chaque nouveau groupe de deux photographies, s'il souhaite ensuite réaliser une visite virtuelle du lieu sans perte d'orientation grâce à un procédé décrit plus loin.

**c - Aspects du dispositif support concernant le contrôle de la teinte d'une image panoramique**

Si l'on se réfère à la figure 6, on voit que la région du dispositif support se trouvant sous la lentille frontale 16 comprend également une pièce d'étalonnage de couleurs 60. La pièce d'étalonnage 60 est avantageusement annulaire et coaxiale à l'axe de rotation 3B de manière à apparaître dans les prises de vue quelle que soit la position angulaire de l'appareil photographique, comme on le voit sur la photographie de la figure 8. La pièce d'étalonnage 60 est agencée ici à la périphérie du cadran 46 de la boussole et est fixée directement sur le verre 43, comme cela apparaît sur la vue en coupe de la figure 7. La pièce d'étalonnage est par exemple un anneau en plastique ou papier collé sur le verre 43.

La pièce d'étalonnage 60 comprend ici une pluralité de secteurs colorés 61A, 61B, 61C présentant chacun une couleur primaire déterminée. Ces couleurs primaires sont de préférence le vert, le rouge et le bleu. Elles sont de préférence choisies non saturées, et présentent par exemple une intensité de 50%. Les valeurs suivantes peuvent être choisies en référence à la norme PANTONE :

Secteurs 61A : Rouge 50% soit Magenta50 + Jaune50
Secteurs 61B : Vert 50% soit Cyan50 + Jaune50
Secteurs 61C : Bleu 50% soit Cyan50 + Magenta50

Les secteurs 61A, 61B, 61C forment des séquences de couleurs primaires qui se répètent sur tout le périmètre de la pièce d'étalonnage 60 et font ainsi apparaître une succession de séquences Rouge Vert Bleu.

Dans une variante de réalisation, la pièce d'étalonnage 60 est un anneau de couleur grise, présentant par exemple un gris moyen à 50% (Noir50) ce qui correspond à une couleur comprenant une égale proportion de Rouge 50%, Vert 50% et bleu 50%. La pièce d'étalonnage peut par ailleurs comprendre, entre les séquences de trois couleurs primaires, des zones de noir ou de blanc ou des séquences de noir et de blanc, ou encore des séquences de noir, de blanc et de gris. On peut encore prévoir la présence d'un gris 18% (Noir18) pour éventuellement corriger la luminance au cours d'une étape de correction de teinte décrite plus loin.

Enfin, la pièce d'étalonnage 60 présente de préférence une bande noire de faible épaisseur à sa périphérie, formant une sorte d'anneau noir qui entoure les séquences de couleurs primaires, dont l'utilité apparaîtra plus loin.

Le dispositif support selon l'invention est bien entendu susceptible de diverses variantes et modes de réalisation entrant dans le cadre de la présente invention, notamment en ce qui concerne la forme et l'agencement de la boussole, la structure de la boussole, la forme et l'agencement de la pièce d'étalonnage de couleurs, sa structure et l'agencement des couleurs sur la pièce d'étalonnage.

D'autre part, bien que le dispositif qui vient d'être décrit ait été initialement conçu pour permettre l'utilisation d'un adaptateur panoramique avec des appareils compacts dépourvus de moyen de montage d'un tel objectif panoramique, il doit être noté que le dispositif support selon l'invention est également utilisable avec des appareils photographiques SLR ("Single Lens Reflex"). Une telle utilisation du dispositif support avec des appareils SLR se justifie notamment par le fait que le dispositif support comprend des éléments additionnels comme la boussole, la languette d'orientation, la pièce d'étalonnage de couleurs, qui sont susceptibles d'intéresser les détenteurs de tels appareils SLR, en général des professionnels de la photographie. L'utilité de ces éléments additionnels apparaîtra clairement à la lecture de la description suivante d'un procédé d'orientation selon l'invention d'une image panoramique, et d'un procédé de correction selon l'invention de la teinte d'une image panoramique numérique.

## II - Description d'un procédé d'obtention d'une image panoramique numérique orientée et à teinte constante

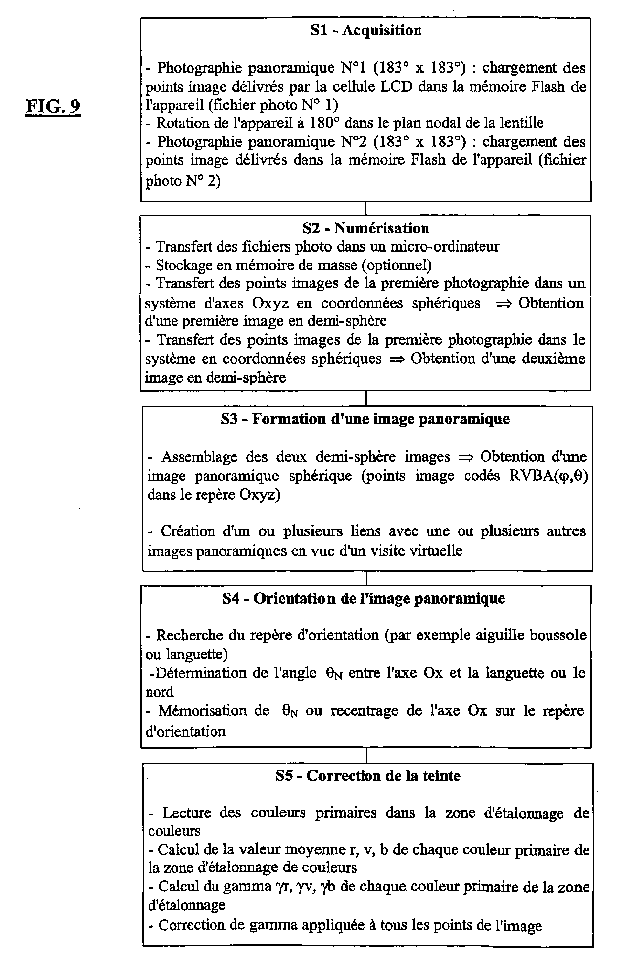

L'organigramme de la figure 9 décrit les principales étapes d'obtention d'une image panoramique numérique orientée et à teinte constante. On distingue sur cet organigramme une étape d'acquisition S1, une étape de numérisation S2, une étape S3 de formation d'une image panoramique numérique, une étape S4 d'orientation de l'image panoramique et une étape S5 de correction de la teinte de l'image panoramique. Les étapes S1, S2 et S3 sont en soi classiques et ne seront que succinctement décrites. L'étape S4 est réalisée conformément à un procédé d'orientation selon l'invention. L'étape S5 est réalisée conformément à un procédé de correction de teinte selon l'invention. Les étapes S4 et S5 sont en soi indépendantes l'une de l'autre et pourraient être interverties. Toutefois, compte-tenu de l'agencement de la pièce d'étalonnage 60 dans le dispositif support 20 décrit plus haut, il est avantageux ici de réaliser l'étape S5 après l'étape S4 pour des raisons qui apparaîtront plus loin.

L'étape S1 consiste à réaliser au moins deux photographies panoramiques complémentaires, en faisant pivoter l'appareil photographique d'un angle de 180° autour d'un axe passant par le plan nodal de la lentille panoramique. Ces étapes sont de préférence réalisées avec un appareil photographique numérique, bien qu'un appareil à pellicule puisse aussi être utilisé si l'on dispose d'un scanner permettant de numériser les photographies pour obtenir des fichiers photo. Les fichiers photo délivrés par l'appareil photographique numérique ou par le scanner contiennent des images dont les points image sont codés RVBA et sont agencés dans une table à deux dimensions, "R" étant le pixel rouge du point image, "V" le pixel vert, "B" le pixel bleu, et "A" le paramètre Alpha ou transparence. Les paramètres R, V, B et A sont généralement codés sous 8 bits et peuvent ainsi présenter une intensité allant de 0 à 255.

L'étape S2 est une étape classique de transfert des deux fichiers photo dans un calculateur, généralement un micro-ordinateur, avec stockage éventuel dans le disque dur. Le micro-ordinateur, sous la gouverne d'un programme approprié, transfère les points image des deux photographies dans un espace mathématique à trois dimensions. On considèrera ici et dans ce qui suit que cet espace mathématique est un système à coordonnées sphériques d'axes Oxyz, qui constitue la solution préférée pour la mise en oeuvre de l'invention. Toutefois, il apparaîtra clairement à l'homme de l'art que la présente invention n'est pas limitée à cet exemple et peut aussi être mise en oeuvre avec d'autres systèmes de coordonnées à trois dimensions, par exemple cylindrique, cartésien, etc..

Ainsi, les points image RVBA de chaque photographie sont transformés au cours de l'étape S2 en points image codés RVBA($\varphi,\theta$), $\varphi$ étant la latitude d'un point calculée relativement à l'axe Ox dans le plan vertical Oxz, et $\theta$ la longitude d'un point calculée relativement à l'axe Ox dans le plan horizontal Oxy. Les angles $\varphi$ et $\theta$ sont codés par exemple sur 4 à 8 octets (norme IEEE). Par convention, l'axe 0x est calé sur le centre de la photographie, comme cela est illustré sur la figure 8. Au terme de l'étape S3, on dispose ainsi de deux images en demi-sphères.

L'étape S3 de formation de l'image panoramique totale consiste à assembler les deux demi-sphères par addition des points image qui les constituent, et fusion éventuelle des zones de recouvrement si les photographies initiales ont été prises avec un angle de prise de vue supérieur à 180°. Avant l'assemblage, l'une des deux demi-sphères est pivotée de 180° autour de l'axe Oz en incrémentant l'angle $\theta$ des points image d'une valeur égale à $\pi$, de sorte qu'une demi-sphère comprend des points image d'une longitude comprise entre $-\pi/2$ et $\pi/2$ tandis que l'autre demi-sphère comprend des points image d'une longitude comprise entre $\pi/2$ et $3\pi/2$.

De façon classique, l'étape S3 peut également comprendre la création de zones actives dans l'image panoramique obtenue, et de liens hyper-ancre reliant les zones actives à d'autres images panoramiques sphériques.

### a - Orientation de l'image panoramique (étape S4)

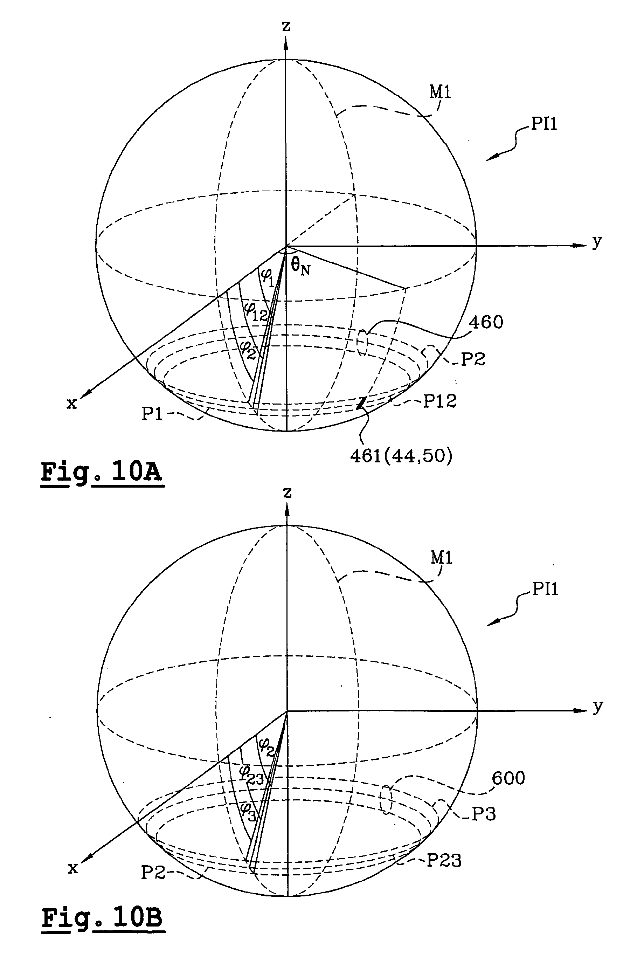

On suppose ici que les deux photographies panoramiques initiales ont été réalisées au moyen du dispositif support décrit plus haut équipé de sa boussole 40, ou au moyen d'une tête panoramique classique équipée conformément à l'invention d'une boussole coaxiale à l'axe de rotation du plan nodal. Dans ces conditions, comme illustré en figure 10A, l'image sphérique PI1 obtenue comprend au voisinage de son pôle sud une zone de cadran 460 qui correspond au cadran 46 décrit plus haut. La zone de cadran 460 occupe un secteur de sphère délimité par deux parallèles P1 et P2, correspondant à la forme annulaire du cadran 46 transposée dans l'espace sphérique. Le parallèle P1 présente une latitude $\varphi1$ et le parallèle P2 une latitude $\varphi2$. Dans le secteur de sphère 460, qui est par exemple de couleur jaune fluorescent comme proposé plus haut, se trouve un repère d'orientation 461 qui doit être détecté et qui présente une longitude $\theta_N$ dans le plan horizontal 0xy. La détermination de cet angle $\theta_N$ constitue l'objectif essentiel de l'étape S4 et du procédé d'orientation selon l'invention.

En pratique, le repère d'orientation 461 peut correspondre à la moitié nord de l'aiguille 44 de la boussole et être de couleur rouge, ou correspondre à la languette 50 et être de couleur verte. Si l'on se réfère au "mode d'emploi" proposé plus haut, la présence de la languette signifie que l'utilisateur a décidé d'utiliser la languette comme repère d'orientation et de ne pas la dissimuler. La détection de la languette doit donc être prioritaire sur la détection de l'aiguille de la boussole.

L'étape S4 peut être mise en oeuvre au moyen de divers algorithmes d'analyse d'image dont la conception est en soi à la portée de l'homme de l'art. Selon un aspect de l'invention, on propose un procédé d'une grande simplicité comprenant tout d'abord une étape de recherche de la zone de cadran 460, visant à déterminer les angles $\varphi1$ et $\varphi2$, puis une étape de recherche du repère d'orientation 461 dans la zone de cadran 460.

### a.1 - Recherche de la zone de cadran

La détection des angles $\varphi1$ et $\varphi2$ est assurée en balayant un quart de sphère en latitude, depuis le pôle sud ($\varphi=-\pi/2$) jusqu'à l'équateur ($\varphi=0$). Le balayage est effectué en suivant un méridien de référence de longitude $\theta_0$, par exemple le méridien M1 de longitude zéro représenté en figure 10A, qui correspond au centre de la photographie. Le centre du cadran de la boussole ayant été choisi de couleur noire, la détection de l'angle $\varphi1$ consiste à détecter une transition du noir au jaune fluorescent et la détection de $\varphi2$ consiste à détecter une transition du jaune fluorescent à une autre couleur que le jaune fluorescent. On définit ainsi une fonction "couleur" qui consiste par exemple en une combinaison pondérée des couleurs R, V, B de chaque point image, les paramètres de pondération étant choisis en fonction de la couleur du cadran pour obtenir une sensibilité de détection maximale.

L'algorithme 1 figurant en annexe fait partie intégrante de la description et décrit la mise en oeuvre de cette étape du procédé de l'invention. Les annotations entre parenthèses sont des commentaires explicatifs et ne font pas partie de l'algorithme. On notera que cet algorithme prévoit le cas où le cadran de la boussole ne serait pas trouvé, de manière qu'un logiciel exécutant l'algorithme puisse désactiver de lui-même la fonction "orientation de l'image" si l'utilisateur a réalisé des photographies sans boussole ou autre moyen d'orientation.

**EP 1 362 255 B1**

**a.2 - Recherche du repère d'orientation et orientation de l'image**

Les angles φ1 et φ2 étant trouvés, il reste à trouver le repère d'orientation 461 dans la zone de cadran comprise entre les parallèles P1 et P2 afin de déterminer l'angle $\theta_N$. Cette recherche est faite ici en maintenant constant l'angle φ et en faisant le tour de la sphère dans le sens de la longitude, de -π à +π. La recherche est faite sur un parallèle intermédiaire P12 situé au centre de la zone de cadran entre les parallèles P1 et P2, d'une latitude φ12 égale à (φ1+φ2)/2. Comme indiqué plus haut, la priorité est donnée à la détection de la languette dont la présence signifie que l'utilisateur a choisi de ne pas utiliser la boussole.

L'algorithme 2 figurant en annexe fait partie intégrante de la description et décrit la mise en oeuvre de cette deuxième étape du procédé d'orientation selon l'invention. Le sous-programme appelé "autre tentative" permet d'envisager le cas où la couleur de référence lue au point où commence le balayage (ici le point d'angle -π sur le méridien M12) serait la couleur du repère d'orientation, ce qui signifierait que la recherche a par coïncidence été entamée à l'endroit où se trouve la languette ou l'aiguille de la boussole.

Une fois l'angle $\theta_N$ trouvé et mémorisé, l'orientation des axes Ox et Oz de l'image numérique est connue et l'on dispose ainsi d'une image orientée.

Dans une variante de réalisation, tous les points image de la sphère peuvent ensuite être recalés en orientant l'axe 0x sur le repère. Dans ce cas, l'angle $\theta_N$ devient égal à 0 après recalage. Cette variante de réalisation qui nécessite du temps de calcul supplémentaire est optionnelle en pratique, la mémorisation de l'angle $\theta_N$ étant suffisante pour conférer à l'image panoramique une orientation qui fait défaut dans l'art antérieur.

L'utilité d'une telle orientation d'une image panoramique numérique apparaîtra par la suite, lorsque l'on décrira un procédé d'affichage d'images panoramiques faisant intervenir l'angle $\theta_N$.

Il apparaîtra clairement à l'homme de l'art que le procédé qui vient d'être décrit est susceptible de diverses variantes et modes de réalisation, tant en ce qui concerne les étapes d'insertion d'un repère d'orientation dans l'image initiale, qu'en ce qui concerne le procédé de détection du repère d'orientation dans l'image panoramique obtenue après numérisation de l'image initiale

Ainsi, dans une variante de réalisation, l'aiguille et le cadran de la boussole sont remplacés par un disque magnétique sensible au champ magnétique terrestre, présentant sur sa face supérieure une couleur déterminée et une ou plusieurs graduations indiquant un ou plusieurs points cardinaux.

Si plusieurs graduations sont prévues pour l'inscription dans l'image initiale de divers repères d'orientation, de telles graduations peuvent également être codées par leur forme plutôt que par leur couleur, par exemple par un nombre de traits noirs parallèles qui diffèrent selon la graduation considérée.

De façon générale, tout moyen permettant d'inscrire un repère d'orientation sur une image initiale destinée à être numérisée comme décrit ci-dessus peut, selon l'invention, être prévu.

**b - Correction de la teinte (étape S5)**

On suppose ici que les deux photographies panoramiques initiales ont été réalisées au moyen du dispositif support décrit plus haut équipé de la pièce d'étalonnage de couleurs 60, ou au moyen d'une tête panoramique classique équipée conformément à l'invention d'une pièce d'étalonnage de couleurs coaxiale à l'axe de rotation du plan nodal. Dans ces conditions, comme illustré en figure 10B, l'image sphérique PI1 obtenue comprend au voisinage de son pôle sud une zone d'étalonnage de couleurs 600 qui correspond à la pièce d'étalonnage 60. La zone d'étalonnage 600 occupe un secteur de sphère délimité par le parallèle P2, de latitude φ2, et un parallèle P3 de latitude φ3. Notons que l'angle φ2 est connu et a été déterminé au cours de l'étape S4, la pièce d'étalonnage de couleurs étant agencée ici à la périphérie du cadran de la boussole. Par ailleurs, le secteur de sphère 600 comprend des séquences de couleurs primaires R,V,B dont l'intensité originale sur la pièce d'étalonnage 60 est connue et sera désignée Iref. Les couleurs étant codées sur 8 bits, soit une échelle d'intensité de couleurs allant de 0 à 255, l'intensité originale Iref est ici de l'ordre de 127 puisque l'on a proposé plus haut de prévoir des couleurs primaires semi-saturées (50%).

Le procédé de correction de teinte selon l'invention comprend les étapes suivantes :

- une étape de détection de la zone d'étalonnage de couleurs 600 dans l'image panoramique,
- une étape de détermination du gamma des couleurs primaires de la zone d'étalonnage de couleurs, faite en référence à l'intensité de couleur de référence Iref attribuée à chaque couleur primaire, ici la valeur 127,
- une étape de correction de gamma appliquée à tout ou partie des points image de l'image panoramique numérique, réalisée au moyen du gamma des couleurs primaires de la zone d'étalonnage de couleurs.

**b.1 - Détection de la zone d'étalonnage**

Cette étape consiste ici à déterminer les angles φ2 et φ3 des parallèles P2 et P3, et se résume ici à une détection de l'angle φ3 puisque l'angle φ2 est connu. L'angle φ3 est déterminé par un algorithme de détection de transition de couleur reposant sur le même principe que l'algorithme 1, qui ne sera pas décrit ici dans un souci de simplicité. La pièce d'étalonnage 60 étant pourvue à sa périphérie d'une mince bande noire 62 (figure 6), la détection de l'angle φ3 consiste à détecter une chute d'intensité de couleur en balayant la sphère en latitude à partir de l'angle φ2, par exemple en suivant le méridien M1.

### b.2 - Calcul du gamma et correction de gamma

L'étape de calcul du gamma des couleurs primaires de la zone d'étalonnage 600 et l'étape de correction de gamma sont effectuées au moyen de formules mathématiques en soi classiques. Ce qui distingue le procédé selon l'invention de l'art antérieur, c'est que ces étapes sont réalisées au moyen d'une référence de couleur commune à toutes les photographies. La correction de teinte effectuée est ainsi constante d'une image panoramique à l'autre, de sorte que les variations de teinte constatées dans l'art antérieur sont supprimées par le procédé de l'invention.

Pour le calcul du gamma, on effectue tout d'abord un calcul de la valeur moyenne "r", "v", "b" des couleurs primaires de la zone d'étalonnage. Il faut en effet tenir compte des variations d'éclairage sur les diverses parties de la pièce d'étalonnage au moment où les photographies initiales sont prises. De plus, comme les conditions de prise de vue diffèrent selon que l'on se trouve face au soleil ou dos au soleil et, pour les photographies effectuées en intérieur, en fonction des sources de lumière présentes, un calcul de l'intensité moyenne des couleurs primaires sur l'ensemble de la zone d'étalonnage s'avèrerait peu précis. La sphère est ainsi divisée en plusieurs secteurs dans le sens de la longitude et la correction de teinte est assurée secteur par secteur, en effectuant dans chaque secteur un calcul de la valeur moyenne des couleurs primaires, un calcul du gamma des couleurs primaires et une correction de gamma.

Dans une approximation suffisante pour l'obtention d'une correction de teinte satisfaisante et homogène, la sphère est divisée en deux demi-sphères correspondant chacune à l'une des photographies panoramiques initiales.

L'algorithme 3 figurant en annexe fait partie intégrante de la description et décrit la mise en oeuvre du procédé selon l'invention avec une sectorisation de l'image limitée à deux demi-sphères. La zone détalonnage 600 (fig. 10B) est lue en suivant un parallèle P23 se situant à mi-chemin entre les parallèles P2 et P3 et présentant une latitude φ23 égale à (φ2 + φ3)/2.

L'application de cet algorithme à diverses images panoramiques permet d'uniformiser la teinte de toutes les images, le résultat visé étant ainsi atteint.

Il apparaîtra clairement à l'homme de l'art que le procédé qui vient d'être décrit est susceptible de diverses variantes et modes de réalisation, tant en ce qui concerne la méthode retenue pour insérer dans l'image initiale une zone d'étalonnage de couleurs qu'en ce qui concerne les étapes de détection de la zone d'étalonnage et de correction de la teinte.

De façon générale, tout moyen permettant l'insertion d'une zone d'étalonnage de couleurs dans une image initiale destinée à être transformée en une image panoramique numérique peut, selon l'invention, être prévu.

Enfin, bien que l'on ait choisi plu haut, dans un souci de simplicité, une intensité de couleur de référence Iref qui est identique pour chaque couleur, il va de soi et il découle des formules figurant dans l'algorithme 3 décrit en Annexe qu'une intensité déterminée Iref(R), Iref(V), Iref(B) peut être choisie pour chaque couleur primaire R, V, B.

### III - Description d'un procédé d'affichage d'une image orientée selon l'invention

### a - Principes généraux du procédé selon l'invention

Comme cela a été exposé au préambule, l'inconvénient des procédés de visite virtuelle classiques est que le secteur initial de l'image panoramique affiché sur l'écran est figé, le "secteur d'image initial" étant le secteur d'image présenté sur l'écran lorsque l'observateur pénètre dans l'image. Pour pallier cet inconvénient, il est nécessaire dans l'art antérieur de prévoir un chaînage complexe des images panoramiques nécessitant dans la plupart des cas une topographie précise des lieux.

Grâce au procédé d'orientation décrit plus haut, on dispose ici d'images panoramiques orientées dans lesquelles l'angle $\theta_N$ entre le repère d'orientation et l'axe Ox est connu. Cet angle est déterminé pour chaque image panoramique traitée, de sorte que les diverses images traitées possèdent une référence d'orientation commune. Selon l'invention, cette référence d'orientation commune est utilisée lors d'une visite virtuelle pour définir de façon dynamique, au moment de l'entrée dans une image panoramique, une orientation qui n'est pas figée comme dans l'art antérieur mais qui dépend de la position "position du regard" de l'observateur au moment où il quitte l'image précédente.

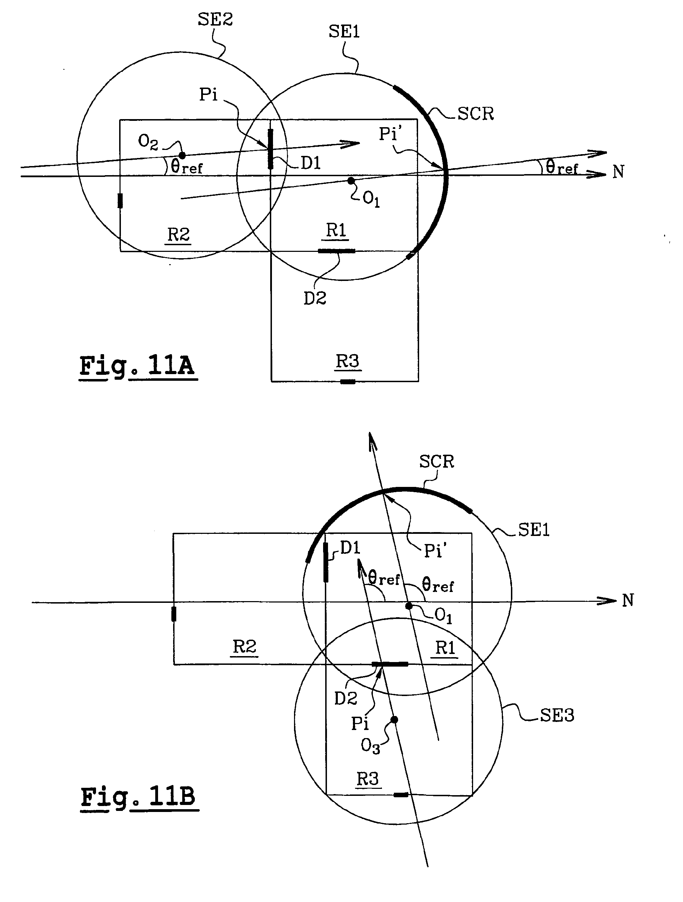

Le procédé selon l'invention sera mieux compris en se référant aux figures 11A et 11B, qui représentent deux exemples d'entrée dans une image panoramique SE1 à partir de deux images panoramiques différentes SE2 et SE3. On considère ici à titre d'exemple que l'image panoramique SE1 représente une pièce R1 contiguë à une pièce R2 et contiguë à une pièce R3. La pièce R2 est représentée par l'image panoramique SE2 et la pièce R3 représentée par l'image panoramique SE3. Les pièces R1 et R2 communiquent par une porte D1 et les pièces R1 et R3 communiquent par une porte D2. Les images panoramiques SE1, SE2, SE3 sont représentées à plat dans le plan horizontal, sous forme de cercles. Dans une région correspondant (après projection sur le cercle) à la porte D1, l'image SE2 comporte une zone active associée à un lien hyper-ancre la rattachant à l'image SE1 (et réciproquement). Dans une région correspondant à la porte D2, l'image SE3 comporte une zone active associée à un lien hyper-ancre la rattachant à l'image SE1 (et réciproquement).

Considérons maintenant en référence à la figure 11A que l'observateur se trouve "dans" l'image SE2 et clique, au moyen d'un pointeur d'écran, sur la zone active correspondant à la porte D1. L'image suivante affichée est ainsi l'image SE1. Selon l'invention, on détermine dans l'image SE2 un angle de référence $\theta$ref qui représente l'angle entre la "position du regard" de l'observateur et le repère d'orientation. La "position du regard" de l'observateur est l'axe passant par le centre $O_2$ de l'image SE2 et le point image Pi de la zone active qui a été sélectionné par l'observateur pour basculer dans l'image suivante. L'angle $\theta$ref est donné par la relation suivante :

$$(1) \quad \theta\text{ref} = \theta\text{pi} + \theta_{N2}$$

dans laquelle $\theta_{N2}$ est l'angle entre l'axe Ox de l'image SE2 et le repère d'orientation, par exemple le nord N, $\theta$pi étant la longitude du point Pi dont les coordonnées sont $\varphi$pi et $\theta$pi.

Selon l'invention, on calcule ensuite un angle $\theta$pi' selon la relation suivante :

$$(2) \quad \theta\text{pi'} = \theta\text{ref} - \theta_{N1}$$

dans laquelle $\theta_{N1}$ est l'angle entre l'axe Ox de l'image SE1 et le repère d'orientation N. L'angle trouvé $\theta$pi' définit dans l'image SE1 un ensemble de points de même orientation.

On choisit ensuite un angle $\varphi$0 de valeur arbitraire, par exemple l'angle zéro, qui définit avec l'angle $\theta$pi' un point Pi' de coordonnées $\varphi$0, $\theta$pi' dans l'image SE1.

Lorsque l'image SE1 est affichée à l'écran (l'écran étant référencé SCR et repéré par un trait épais sur le cercle SE1), le secteur initial présenté à l'écran est un secteur de l'image SE1 dont le point central est le point Pi'. Le point central Pi' du secteur initial SCR correspond au point central de l'écran puisque le secteur initial occupe la totalité de l'écran. Le terme "écran" désigne ici la fenêtre d'affichage du secteur d'image panoramique, cette fenêtre pouvant en pratique n'occuper qu'une partie du "vrai" écran que l'observateur a devant lui.

On voit que le point Pi' forme, avec le centre $O_1$ de l'image SE1, un axe présentant un angle $\theta$ref avec le repère d'orientation, de sorte que la "position du regard" offerte à l'observateur quand il entre dans l'image SE1 est identique à la "position du regard" de l'observateur lorsqu'il quitte l'image SE2.

L'angle $\varphi$0 du point central Pi' étant ici égal à 0, le basculement d'une image à l'autre remet à l'horizontale la "position du regard". Dans une variante de réalisation, l'angle $\varphi$0 est choisi égal à l'angle ($\varphi$pi du point Pi de sortie de l'image précédente, de sorte que l'observateur pénètre dans l'image SE1 avec un angle d'observation qui correspond, relativement au plan vertical, à celui qu'il avait dans l'image SE2.

Dans une variante de réalisation, on définit un secteur angulaire centré sur l'angle $\theta$pi' et délimité par deux valeurs $\theta$pi'-$\theta$1/2 et $\theta$pi'+$\theta$1/2, l'angle "$\theta$1" correspondant à l'angle de vision offert par l'écran dans le plan horizontal. On affiche ensuite à l'écran l'ensemble des points ayant un angle $\theta$ appartenant à ce secteur angulaire, en définissant comme précédemment un angle $\varphi$0 de pénétration dans le plan vertical et un secteur correspondant compris entre $\varphi$0-$\varphi$1/2 et $\varphi$0+$\varphi$1/2, "$\varphi$1" étant l'angle de vision offert par l'écran dans le plan vertical.

La figure 11B illustre une entrée dans l'image SE1 à partir de l'image SE3 et montre que le procédé de l'invention a pour effet de modifier de façon automatique le secteur initial affiché sur l'écran. Ici, la "position du regard" dans le plan horizontal est l'axe [$O_3$ Pi) déterminé par le centre $O_3$ de l'image SE3 et un point Pi sélectionné par le pointeur d'écran sur la zone active (appartenant ici à la porte D2). L'angle $\theta$ref est de ce fait différent de sa valeur précédente et le secteur d'image SCR présenté à l'écran est orienté à l'Ouest alors qu'il était orienté sensiblement au Nord dans l'exemple de la figure 11A.

Le procédé selon l'invention est bien entendu susceptible de diverses variantes de réalisation. Dans ce qui précède, on a choisi par convention d'entrer dans une image en conservant la "position du regard" de l'observateur. Diverses autres méthodes de détermination dynamique du secteur initial peuvent être prévues tout en restant dans le cadre de la présente invention, c'est-à-dire en utilisant le repère d'orientation comme moyen de référence pour la détermination du secteur initial.

**b - Mise en oeuvre du procédé**

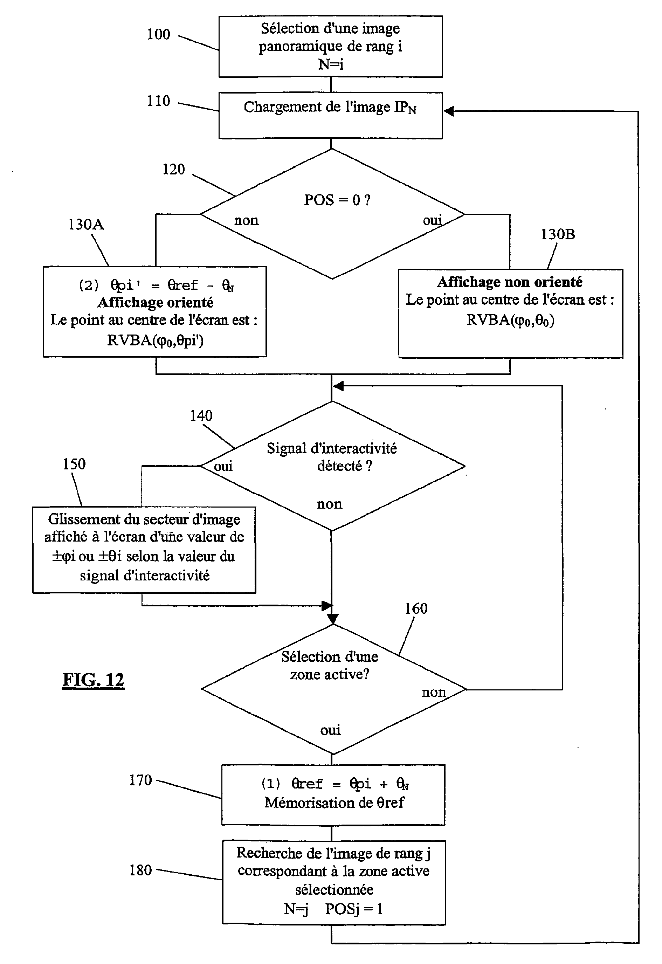

La figure 12 est un organigramme décrivant les principales étapes d'un procédé de visite virtuelle selon l'invention. A l'instar des procédés d'orientation de correction de teinte décrits ci-dessus, ce procédé est exécuté par un ordinateur ou un micro-ordinateur auquel on fournit un programme comprenant des algorithmes de traitement d'image, ce programme étant par exemple enregistré sur un CD-ROM ou téléchargeable sur le réseau Internet.

La visite virtuelle commence au cours d'une étape 100 par la sélection d'une première image panoramique $IP_N$ de rang N=i, qui est chargée dans une mémoire tampon du micro-ordinateur au cours d'une étape 110. Cette première image peut être imposée à l'observateur ou être choisie par ce dernier. Au cours d'une étape 120, le micro-ordinateur teste un drapeau "$POS_i$" qui lui indique si un angle θref de "position du regard" a été défini pour cette image. Si le drapeau $POS_i$ est égal à 1, le micro-ordinateur procède à un affichage orienté de l'image au cours d'une étape 130A. Si le drapeau POS est égal à 0, le micro-ordinateur procède à un affichage non orienté de l'image au cours d'une étape 130B.

L'affichage orienté de l'image à l'étape 130A consiste tout d'abord à calculer l'angle θpi' du point central du secteur initial en fonction de l'angle de référence θref et de l'angle $θ_N$, conformément à la relation (1) décrite plus haut. Ensuite, le micro-ordinateur sélectionne le secteur d'image dont le point central présente les coordonnées (φ0, θpi') et l'affiche à l'écran.

L'affichage non orienté de l'étape 130B est effectué conformément à l'art antérieur, le point central du secteur initial étant un point de coordonnées φ0, θ0 dont l'angle θ0 est arbitraire.

Après l'étape 130A ou 130B de détermination du point d'entrée dans l'image panoramique, le micro-ordinateur reste à l'intérieur d'une boucle de gestion d'interactivité en soi classique, comprenant des étapes 140, 150 et 160, qui permet à l'observateur de déplacer l'image vers le haut, vers le bas, à gauche ou à droite au moyen d'un curseur d'écran ou de son clavier, les actions de l'observateur générant un signal d'interactivité qui détermine le déplacement de l'image dans la fenêtre d'observation.

Ainsi, au cours de l'étape 140, le micro-ordinateur détermine si le signal d'interactivité est présent. Si le signal d'interactivité est présent, le micro-ordinateur bascule dans l'étape 150 où il fait glisser l'image dans l'écran en fonction du signe et/ou de la valeur du signal d'interactivité, puis passe à l'étape 160 où il détermine si une zone active a été sélectionnée ou non. Si le signal d'interactivité n'est pas présent, le micro-ordinateur passe directement à l'étape de test 160. Après l'étape de test 160, et si aucune zone active n'est sélectionnée, le micro-ordinateur revient à l'étape 140.

La boucle 140-160 ou 140-150-160 est rompue lorsqu'une zone active et sélectionnée. Le micro-ordinateur bascule alors dans une étape 170 où il calcule l'angle de référence θref conformément à la relation (1) décrite plus haut, l'angle θref correspondant à la "position du regard" de l'observateur, puis mémorise l'angle θref.

Au cours d'une étape 180, le micro-ordinateur détermine l'image de rang j qui est désigné par le lien hyper-ancre associé à la zone active sélectionnée, met à 1 le drapeau $POS_j$ de l'image de rang j et revient à l'étape 100 pour le chargement de l'image $IP_{N=j}$. Le drapeau POS ayant été mis à 1 avant le chargement de l'image, l'affichage du secteur initial de la nouvelle image se fait de façon orientée au cours de l'étape 130A.

**c - Application de l'invention à la vidéosurveillance**

Le procédé d'affichage qui vient d'être décrit, ainsi que le procédé d'orientation d'image sur lequel il est basé, sont susceptible d'applications dans d'autres domaines que celui de la photographie numérique.

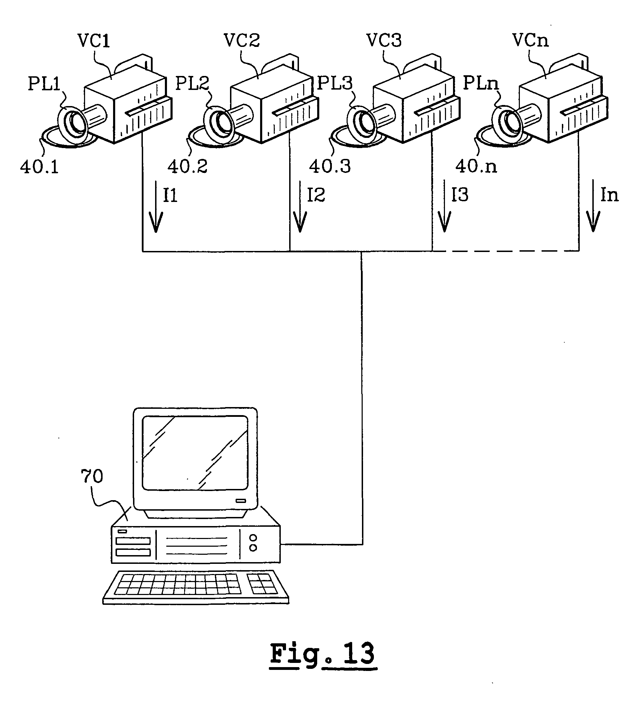

A titre d'exemple, la figure 13 représente un système de vidéosurveillance comprenant des caméras vidéo VC1, VC2, VC3,...VCn équipées de capteurs d'image numériques de type CCD. Les caméras sont reliées à un ordinateur central 70 agencé dans un centre de surveillance et pourvu au moins d'un écran.

Notons ici que l'inconvénient des systèmes de vidéosurveillance classiques est que les diverses caméras doivent être montées sur des axes motorisés pilotés à distance, afin d'élargir le champ de surveillance et de pouvoir scruter les divers recoins d'un lieu à surveiller.

Ici, les caméras vidéo V1, VC2, VC3..VCn sont équipées d'objectifs panoramiques PL1, PL2, PL3,...PLn offrant un angle de vision de préférence égal ou supérieur à 180°. Les diverses images I1, 12, I3,...In délivrées par les caméras sont traitées en temps réel par l'ordinateur central en appliquant l'étape classique de numérisation S2 (figure 9) par transfert dans un système de coordonnées à trois dimensions. Les images sont présentées à l'écran soit simultanément, soit par sélection d'une caméra parmi les n-1 caméras disponibles.

L'avantage de ce procédé de vidéosurveillance est qu'il permet de procéder à une scrutation des lieux en faisant simplement glisser le secteur d'image présenté à l'écran. Cette méthode est équivalente à celle qui consiste à faire pivoter une caméra autour d'un axe mais présente l'avantage d'une importante économie de moyens puisque les axes motorisés des caméras et les moyens de commande à distance des axes motorisés ne sont plus nécessaires. De plus, les opérations de maintenance du parc de caméras en sont considérablement simplifiées.

Selon l'invention, chaque caméra est en outre équipée d'un moyen d'orientation 40.1, 40.2, 40.3...40.n, par exemple une boussole du type décrit plus haut, qui est agencé dans le champ de prise de vue des objectifs grand angle PL1 à PLn. Chaque image reçue par l'ordinateur central 70 est orientée en temps réel conformément à l'étape S4 décrite plus haut, et les transitions d'une image à l'autre sont traitées en tenant compte de l'angle $\theta_N$ conformément au procédé illustré en figure 12.

En pratique, l'application du procédé de l'invention peut être limitée ici aux transitions entre deux images délivrées par deux caméras différentes. En effet, les images panoramiques délivrées par la même caméra, bien que rafraîchies en permanence, conservent la même orientation. Par contre, l'application du procédé de l'invention à la transition entre deux images fournies par des caméras différentes procure un grand confort d'utilisation et permet par exemple de "suivre" sans perte d'orientation une personne traversant plusieurs champs de surveillance, en passant d'une caméra à l'autre. Le procédé selon l'invention peut également être mis en oeuvre lorsque les images délivrées par les caméras sont affichées simultanément sur un ou sur plusieurs écrans, par exemple pour orienter simultanément et dans la même direction tous les secteurs d'images.

Dans un tel système de vidéosurveillance, les objectifs panoramiques des caméras peuvent également être équipés d'une pièce d'étalonnage de couleurs, et l'étape de correction de teinte S5 décrite plus haut peut être appliquée aux images panoramiques issues des images vidéo délivrées par les caméras.

**ANNEXE**

**(Faisant partie intégrante de la description)**

**Algorithme 1 :**

Définitions :

fonction "couleur ($\varphi, \theta$)" = f(R,V,B) au point ($\varphi, \theta$)
$\varepsilon$ = constante > 0 *(incrément de balayage)*
**continuer=**VRAI
seuil S1 = constante > 0 (*S1 : seuil de détection d'une variation de couleur*)
$\theta_0$ = constante ($\theta_0$ *définit le méridien M1 de recherche*)
$\theta = \theta_0$ *(la recherche va s'effectuer sur le méridien M1)*
Cref1 = couleur ($-\pi/2, \theta_0$) *(Cref1 est la couleur de référence au pôle sud de l'image (ici du noir), sur le méridien M1)*

$$\varphi = -\pi/2$$

*(recherche de $\varphi$1 pour $\varphi$ allant de -$\pi$/2 à 0 :)*
Tant que **continuer**=VRAI faire

$$c = couleur(\varphi, \theta_0)$$

Si différence entre c et Cref1 > S1
Alors ($\varphi$1 = $\varphi$ et **continuer**=FAUX
Sinon $\varphi = \varphi + \varepsilon$
Fin si
Si $\varphi$ > 0 *(balayage de $\varphi$ = -$\pi$/2 à 0 terminé, $\varphi$1 non trouvé)*
Alors aller à **<résultat 1>**
Fin si
Fin Tant que
*(recherche de $\varphi$2 pour $\varphi$ allant de $\varphi$1 à 0 :)*
Cref2 = couleur ($\varphi$1, $\theta_0$) *(couleur de référence du cadran en $\varphi$1 (ici du jaune))*
**continuer=**VRAI
Tant que **continuer**=VRAI faire

$$c = couleur(\varphi, \theta_0)$$

Si différence entre c et p2 > S1
Alors φ2 = φ et **continuer**=FAUX
Sinon φ = φ + ε
Fin si
Si φ > 0
Alors aller à **<résultat 1>**
Fin si
Fin tant que
Aller à **<résultat 2>**
**<résultat 1>**
"Cadran boussole non trouvé"
Aller à **<fin>**
**<résultat 2>**
Mémorisation de φ1 et φ2
**<fin>**

**Algorithme 2 :**

Définitions :

Fonction "couleur $(\varphi, \theta)$'' = f(R,V,B) au point $(\varphi, \theta)$)

$$\varepsilon = \texttt{constante} > 0$$

"couleur languette" = constante
seuil S3 = constante > 0 *(seuil détection languette ou aiguille)*
seuil S4 = constante > 0 *(seuil détection languette)*
θ1 = -π *(angle initial de choix de la couleur de référence Cref)*
θ = -π *(angle initial de recherche languette ou aiguille)*
φ12 = (φ1 + φ2)/2 *(parallèle P12 de recherche languette ou aiguille)*
**<boucle 1>** *(recherche pour θ allant de -π à +π)*
Cref = couleur (φ12, θ1) *(couleur de référence à θ1)*
c = couleur (φ12, θ) *(couleur testée)*
si différence entre c et Cref > S3
alors aller à **<détermination>** *(quelque chose a été trouvé)*
sinon θ = θ + ε
si θ > π
aller à **<autre tentative>**
sinon retour à **<boucle 1>**
**<détermination>** *(détermination languette ou aiguille boussole)*
$\theta_N$ = θ *(angle $\theta_N$ du repère d'orientation trouvé)*
si différence entre couleur (φ12, $\theta_N$) et "couleur languette" < S4
alors aller à **<résultat 2>**
sinon aller à **<résultat 3>**
**<autre tentative>**
θ1 = θ1 + ε *(autre choix de couleur de référence)*
si θ1 > π aller à **<résultat 1>**
sinon θ = -π et aller à **<boucle 1>**
**<résultat 1>**
"aucun repère d'orientation trouvé, image non orientée"
**<résultat 2>**
"languette trouvée"
**<résultat 3>**
"aiguille boussole trouvée "
mémorisation de $\theta_N$

**<fin>**

**Algorithme 3 :**

Définitions :

$$R(D(\varphi, \theta)) = \text{composante rouge du point image } D(\varphi, \theta)$$

$$V(D(\varphi, \theta)) = \text{composante verte du point image } D(\varphi, \theta)$$

$$B(D(\varphi, \theta)) = \text{composante bleue du point image } D(\varphi, \theta)$$

Seuil S5 = constante > 0 *(seuil détection du rouge, du vert ou du bleu)*
$\varphi = \varphi23 = (\varphi2 + \varphi3)/2$ *(lecture de la zone d'étalonnage selon le parallèle P23)*
$\varepsilon$ = constante > 0 (incrément de *lecture en latitude* $\theta$)
Iref = 127 (*intensité de référence des couleurs primaires sur la pièce d'étalonnage)*
**<début >**
APPEL FONCTION « **TRAITEMENT DEMI-SPHERE** », avec :
**début** = $-\pi/2$
**fin** = $\pi/2$
APPEL FONCTION « **TRAITEMENT DEMI-SPHERE** », avec :

$$\textbf{début} = \pi/2$$

$$\textbf{fin} = 3\pi/2$$

**< fin >**
**FONCTION « TRAITEMENT DEMI-SPHERE » (paramètres = début, fin)**
$\theta$ = **début** *(angle initial de balayage de la zone d'étalonnage)*
r = 0, v = 0, b = 0 *("r", "v" et "b" valeurs moyennes du rouge, du vert et du bleu sur la zone d'étalonnage)*
NR = 0, NV = 0, NB = 0 *(NR, NV, NB : paramètres de calcul des valeurs moyennes r, v, b)*
**<lecture de la zone d'étalonnage>**
Si $R(D(\varphi, \theta))$ > S5
aller à **<addition des points rouge>**
Si $V(D(\varphi, \theta))$ > S5
aller à **<addition des points verts>**
Si $B(D(\varphi, \theta))$ > S5
aller à **<addition des points bleus>**
**<addition des points rouges>**

$$r = r + R(D(\varphi, \theta))$$

$$NR = NR + 1$$

aller à **<incrémenter>**
**<addition des points verts>**

$$v = v + V(D(\varphi, \theta))$$

$$NV = NV + 1$$

aller à **<incrémenter>**
**<addition des points bleus>**

$$b = b + B(D(\varphi, \theta))$$

$$NB = NB + 1$$

aller à **<incrémenter>**
**<incrémenter>**

$$\theta = \theta + \varepsilon$$

si $\theta$ > fin
aller à **<calcul de l'intensité moyenne>**
sinon aller à **<lecture de la zone d'étalonnage>**
**<calcul de l'intensité moyenne>**
*(calcul de l'intensité moyenne r, v, b de chaque couleur primaire)*

$$r = r/NR$$

$$v = v/NV$$

$$b = b/NB$$

aller à **<calcul du gamma>**
**<calcul du gamma>**
*(calcul du gamma $\gamma r$, $\gamma v$, $\gamma b$ de chaque couleur primaire)*

$$\gamma r = [\log(r/255]/[\log(Iref/255)]$$

$$\gamma v = [\log(v/255)]/[\log(Iref/255)]$$

$$\gamma b = [\log(b/255)]/[\log(Iref/255)]$$

aller à **<correction de la teinte>**
**<correction de la teinte>**
*(correction de gamma sur tout le secteur d'image)*
pour $\theta$ allant de **début** à fin
pour $\gamma$ allant de $-\pi/2$ à $+\pi/2$
faire :

$$R(D(\varphi, \theta)) = 255[R(D(\varphi, \theta))/255]^{\gamma_r}$$

$$V(D(\varphi, \theta)) = 255[V(D(\varphi, \theta))/255]^{\gamma_v}$$

$$B(D(\varphi, \theta)) = 255[B(D(\varphi, \theta))/255]^{\gamma_b}$$

**<FIN FONCTION>**

**Revendications**

**1.** Dispositif support d'appareil photographique (20, 21), comprenant des moyens (23, 12) de fixation d'un appareil photographique (10) équipé ou pouvant être équipé d'un premier objectif (11), et des moyens (3A, 3B) de rotation autour d'un axe, **caractérisé en ce qu'**il comprend des moyens (25, 27, 32) de fixation d'un objectif adaptateur (15), notamment un objectif adaptateur panoramique, agencés pour maintenir l'objectif adaptateur (15) dans l'alignement du premier objectif (11) sans qu'il soit nécessaire de fixer l'objectif adaptateur à l'appareil photographique.

**2.** Dispositif support selon la revendication 1, **caractérisé en ce que** les moyens (23, 12) de fixation d'un appareil photographique et les moyens (25, 27, 32) de fixation d'un objectif adaptateur sont agencés pour maintenir l'objectif adaptateur (15) dans une position telle que l'axe de rotation (3B) du dispositif support se trouve sensiblement dans le plan nodal de la lentille frontale (16) de l'objectif adaptateur.

**3.** Dispositif support selon l'une des revendications 1 et 2, comprenant un système à rappel élastique (27, 27A, 27B) pour pousser l'objectif adaptateur (15) dans une direction correspondant à l'emplacement de la lentille frontale du premier objectif (11).

**4.** Dispositif support selon l'une des revendications 1 à 3, comprenant une pièce mobile (27) et des moyens (30A, 30B, 30C) de fixation de l'objectif adaptateur (15) à la pièce mobile, la pièce mobile étant montée coulissante et poussée par un moyen élastique (27A, 27B) dans une direction correspondant à l'emplacement de la lentille frontale du premier objectif (11).

**5.** Dispositif support selon la revendication 4, dans lequel la pièce mobile (27) est un fourreau recevant tout ou partie de l'objectif adaptateur.

**6.** Dispositif support selon l'une des revendications 4 et 5, dans lequel la pièce mobile (27) comprend sur sa face arrière une excroissance ou un bourrelet (29) destiné à venir au contact d'une partie périphérique frontale du premier objectif (11), de manière que la lentille arrière de l'objectif adaptateur (15) et la lentille frontale du premier objectif (11) ne soient pas en contact.

**7.** Dispositif support selon l'une des revendications 1 à 6, comprenant un guide optique (36) pour amener une lumière frontale jusqu'à une cellule photosensible (13) de l'appareil photographique.

**8.** Dispositif support selon l'une des revendications 1 à 7, comprenant une boussole (40) agencée dans un plan sensiblement inférieur à la zone de fixation de l'objectif adaptateur (15), de manière à apparaître dans la partie inférieure d'une prise de vue lorsque l'objectif adaptateur est un objectif panoramique.

**9.** Dispositif support selon la revendication 8, dans lequel la boussole comprend un cadran (46) de couleur artificielle destinée à être distinguée des couleurs naturelles d'une prise de vue au cours d'une analyse d'image par ordinateur visant à trouver l'emplacement de la boussole dans une image.

**10.** Dispositif support selon la revendication 9, dans lequel la boussole comprend une aiguille (44) comprenant sur une première moitié nord ou sud une couleur présentant un contraste élevé relativement à la couleur du cadran et sur une seconde moitié sud ou nord une couleur sensiblement identique à la couleur du cadran, afin d'être distinguée du cadran au cours d'une analyse d'image par ordinateur visant à trouver l'emplacement de l'aiguille.

**11.** Dispositif support selon l'une des revendications 8 à 10, dans lequel la boussole présente une partie centrale de couleur sombre (45) de sorte que le cadran de la boussole forme un anneau coloré dont la forme facilite la détection du cadran au cours d'une analyse d'image par ordinateur visant à trouver l'emplacement du cadran.

**12.** Dispositif support selon l'une des revendications 8 à 11, **caractérisé en ce qu'**il comprend une languette (50) agencée dans un plan sensiblement inférieur à la zone de fixation de l'objectif adaptateur (15), et des moyens (41, 51, 52) pour agencer la languette soit dans une position visible où la languette apparaît dans la partie inférieure d'une prise de vue lorsque l'objectif adaptateur est un objectif panoramique, soit dans une position masquée où la languette n'apparaît pas dans la prise de vue.

**13.** Dispositif selon la revendication 12, dans lequel la languette (50) s'étend au-dessus d'un cadran (46) de boussole (40) et présente une couleur offrant un contraste élevé relativement à une couleur de cadran afin de faciliter la détection de la languette au cours d'une analyse d'image par ordinateur visant à trouver l'emplacement de la languette.

**14.** Dispositif support selon l'une des revendications 12 et 13, dans lequel la languette (50) est montée rotative autour d'un axe (41) coaxial à l'axe de rotation (3B) du dispositif support.

**15.** Dispositif support selon l'une des revendications 1 à 14, **caractérisé en ce qu'**il comprend une pièce d'étalonnage de couleurs (60) comprenant au moins trois échantillons de couleurs, agencée dans un plan sensiblement inférieur au plan de fixation de l'objectif adaptateur (15) et apparaissant dans la partie inférieure d'une prise de vue lorsque l'objectif adaptateur est un objectif panoramique.

**16.** Dispositif support selon l'une des revendications 14 et 15, dans lequel la pièce d'étalonnage de couleurs (60) est circulaire et concentrique au cadran (46) d'une boussole (40).

**17.** Kit de photographie pour la réalisation de photographies grand angle, **caractérisé en ce qu'**il comprend :

- un dispositif support d'appareil photographique selon l'une des revendications 1 à 16, pourvu d'un axe de rotation,
- un appareil photographique (10) équipé ou pouvant être équipé d'un premier objectif, et
- un objectif adaptateur panoramique (15),

le dispositif support étant conformé pour que le plan nodal de la lentille frontale (16) de l'objectif adaptateur soit sensiblement aligné avec l'axe de rotation (3B) du dispositif support sans qu'il soit nécessaire de procéder à un réglage particulier ou à des essais de correction d'erreurs de parallaxe.

**18.** Procédé pour la réalisation de photographies grand angle au moyen d'un appareil photographique (10) équipé ou pouvant être équipé d'un premier objectif (11) et au moyen d'un objectif adaptateur panoramique (15), **caractérisé en ce qu'**il comprend les étapes consistant à :

- prévoir un dispositif support (20, 21) de l'appareil photographique comprenant des moyens (3A, 3B) de rotation autour d'un axe, des moyens (23, 12) de fixation de l'appareil photographique et des moyens (25, 27, 32) de fixation de l'objectif adaptateur, les moyens de fixation de l'objectif adaptateur étant agencés pour maintenir l'objectif adaptateur dans l'alignement du premier objectif sans qu'il soit nécessaire de fixer l'objectif adaptateur à l'appareil photographique,
- fixer l'appareil photographique sur le dispositif support, et
- fixer l'objectif adaptateur sur le dispositif support.

**19.** Procédé selon la revendication 18, comprenant une étape consistant à équiper le dispositif support d'un système à rappel élastique (27, 27A, 27B) pour pousser l'objectif adaptateur dans une direction correspondant à l'emplacement de la lentille frontale du premier objectif.

**20.** Procédé selon l'une des revendications 18 et 20, comprenant une étape consistant à équiper le dispositif support d'un guide optique (36) pour amener une lumière frontale jusqu'à une cellule photosensible de l'appareil photographique.

**21.** Procédé selon l'une des revendications 18 à 20, comprenant une étape consistant à conformer le dispositif support de manière que l'axe de rotation du dispositif support (3B) se trouve sensiblement dans le plan nodal de la lentille frontale (16) de l'objectif adaptateur.

22. Procédé selon l'une des revendications 18 à 21, comprenant une étape consistant à équiper le dispositif support d'une boussole (40) agencée dans un plan sensiblement inférieur à la zone de fixation de l'objectif adaptateur de manière à apparaître dans la partie inférieure d'une prise de vue lorsque l'objectif adaptateur est un objectif panoramique.

23. Procédé selon l'une des revendications 18 à 22, comprenant une étape consistant à équiper le dispositif support d'une languette (50) agencée dans un plan sensiblement inférieur à la zone de fixation de l'objectif adaptateur, et de moyens (41, 51, 52) pour agencer la languette dans une position où la languette apparaît dans la partie inférieure d'une prise de vue lorsque l'objectif adaptateur est un objectif panoramique.

24. Procédé selon l'une des revendications 18 à 23, comprenant une étape consistant à équiper le dispositif support d'une pièce d'étalonnage de couleurs (60) comprenant au moins trois couleurs primaires, la pièce d'étalonnage étant agencée dans un plan sensiblement inférieur au plan de fixation de l'objectif adaptateur de manière à apparaître dans la partie inférieure d'une prise de vue lorsque l'objectif adaptateur est un objectif panoramique.

**Claims**

1. Camera support device (20, 21), comprising means (23, 12) for attaching a camera (10) fitted or capable of being fitted with a first lens (11), and means (3A, 3B) for rotating around an axis, **characterised in that** it comprises means (25, 27, 32) for attaching an adapter lens (15), particularly a panoramic adapter lens, arranged to hold the adapter lens (15) in line with the first lens (11) without the need to attach the adapter lens to the camera.

2. Support device according to claim 1, **characterised in that** the means (23, 12) for attaching a camera and the means (25, 27, 32) for attaching an adapter lens are arranged to hold the adapter lens (15) in a position such that the axis of rotation (3B) of the support device is located substantially in the nodal plane of the front lens (16) of the adapter lens.

3. Support device according to one of claims 1 and 2, comprising a spring-back system (27, 27A, 27B) to push the adapter lens (15) in a direction corresponding to the location of the front lens of the first lens (11).

4. Support device according to one of claims 1 to 3, comprising a mobile component (27) and means (30A, 30B, 30C) for attaching the adapter lens (15) to the mobile component, the mobile component being slidably mounted and pushed by an elastic means (27A, 27B) in a direction corresponding to the location of the front lens of the first lens (11).

5. Support device according to claim 4, wherein the mobile component (27) is a socket receiving all or part of the adapter lens.

6. Support device according to one of claims 4 and 5, wherein the mobile component (27) comprises an outgrowth or a rim (29) on its back face intended to come into contact with a peripheral front part of the first lens (11), so that the back lens of the adapter lens (15) and the front lens of the first lens (11) are not in contact.

7. Support device according to one of claims 1 to 6, comprising an optical guide (36) to take a front light to a light-sensitive cell (13) of the camera.

8. Support device according to one of claims 1 to 7, comprising a compass (40) arranged in a plane substantially below the attachment area of the adapter lens (15), so that it appears in the lower part of an exposure when the adapter lens is a panoramic lens.

9. Support device according to claim 8, wherein the compass comprises a face (46) of artificial colour designed to be distinguished from the natural colours of an exposure during a computer image analysis aiming to find the location of the compass in an image.

10. Support device according to claim 9, wherein the compass comprises a needle (44) comprising a colour that contrasts highly with the colour of the face on a first north or south half and a colour substantially identical to the colour of the face on a second south or north half, so as to be distinguished from the face during a computer image analysis aiming to find the location of the needle.

11. Support device according to one of claims 8 to 10, wherein the compass has a centre part in a dark colour (45) such that the face of the compass forms a coloured ring the shape of which facilitates the detection of the face during a computer image analysis aiming to find the location of the face.

12. Support device according to one of claims 8 to 11, **characterised in that** it comprises a tongue (50) arranged in a plane substantially below the attachment area of the adapter lens (15), and means (41, 51, 52) for arranging the tongue either in a visible position where the tongue appears in the lower part of an exposure when the adapter lens is a panoramic lens, or in a hidden position where the tongue does not appear in the exposure.

13. Device according to claim 12, wherein the tongue (50) extends over a compass (40) face (46) and is of a colour that contrasts highly with a face colour so as to facilitate the detection of the tongue during a computer image analysis aiming to find the location of the tongue.

14. Support device according to one of claims 12 and 13, wherein the tongue (50) is rotatably mounted around an axis (41) coaxial to the axis of rotation (3B) of the support device.

15. Support device according to one of claims 1 to 14, **characterised in that** it comprises a colour-grading component (60) comprising at least three samples of colours, arranged in a plane substantially below the attachment plane of the adapter lens (15) and appearing in the lower part of an exposure when the adapter lens is a panoramic lens.

16. Support device according to one of claims 14 and 15, wherein the colour-grading component (60) is circular and concentric to the face (46) of a compass (40).

17. Photography kit for taking wide-angle photographs, **characterised in that** it comprises:

    - a camera support device according to one of claims 1 to 16, with an axis of rotation,
    - a camera (10) fitted or capable of being fitted with a first lens, and
    - a panoramic adapter lens (15),

the support device being shaped so that the nodal plane of the front lens (16) of the adapter lens is substantially in line with the axis of rotation (3B) of the support device without the need to make any particular adjustment or conduct any tests to correct parallax errors.

18. Method for taking wide-angle photographs by means of a camera (10) fitted or capable of being fitted with a first lens (11) and by means of a panoramic adapter lens (15), **characterised in that** it comprises the steps of:

    - providing a support device (20, 21) of the camera comprising means (3A, 3B) for rotating around an axis, means (23, 12) for attaching the camera and means (25, 27, 32) for attaching the adapter lens, the means for attaching the adapter lens being arranged to hold the adapter lens in line with the first lens without the need to attach the adapter lens to the camera,
    - attaching the camera onto the support device, and
    - attaching the adapter lens onto the support device.

19. Method according to claim 18, comprising a step of fitting the support device with a spring-back system (27, 27A, 27B) to push the adapter lens in a direction corresponding to the location of the front lens of the first lens.

20. Method according to one of claims 18 and 20, comprising a step of fitting the support device with an optical guide (36) to take a front light to a light-sensitive cell of the camera.

21. Method according to one of claims 18 to 20, comprising a step of shaping the support device so that the axis of rotation of the support device (3B) is located substantially in the nodal plane of the front lens (16) of the adapter lens.

22. Method according to one of claims 18 to 21, comprising a step of fitting the support device with a compass (40) arranged in a plane substantially below the attachment area of the adapter lens so that it appears in the lower part of an exposure when the adapter lens is a panoramic lens.

23. Method according to one of claims 18 to 22, comprising a step of fitting the support device with a tongue (50) arranged in a plane substantially below the attachment area of the adapter lens, and means (41, 51, 52) for arranging the tongue in a position where the tongue appears in the lower part of an exposure when the adapter lens is a panoramic lens.

24. Method according to one of claims 18 to 23, comprising a step of fitting the support device with a colour-grading component (60) comprising at least three primary colours, the grading component being arranged in a plane substantially below the attachment plane of the adapter lens so that it appears in the lower part of an exposure when the adapter lens is a panoramic lens.

**Patentansprüche**

1. Haltevorrichtung für eine Fotokamera (20, 21) mit Mitteln (23, 12) zum Befestigen einer Fotokamera (10), die mit einem ersten Objektiv (11) versehen ist oder versehen werden kann, und mit Mitteln (3A, 3B) zum Rotieren um eine Achse, **dadurch gekennzeichnet, dass** sie mit Mitteln (25, 27, 32) zum Befestigen eines Adapaterobjektivs (15), insbesondere eines Panorama-Adapterobjektivs versehen ist, die vorgesehen sind, um das Adapterobjektiv (15) zum ersten Objektiv (11) ausgerichtet zu halten, ohne dass es notwendig wäre, das Adapterobjektiv an der Fotokamera zu befestigen.

2. Haltevorrichtung nach Anspruch 1, **dadurch gekennzeichnet, dass** die Mittel (23, 12) zum Befestigen einer Fotokamera und die Mittel (25, 27, 32) zum Befestigen eines Adapterobjektivs angeordnet sind, um das Adapterobjektiv (15) in einer Position zu halten derart, dass die Rotationsachse (3B) der Haltevorrichtung sich im wesentlichen in der Knotenebene der Frontlinse (16) des Adapterobjektivs befindet.

3. Haltevorrichtung nach einem der Ansprüche 1 und 2, die ein elastisches Rückstellsystem (25, 27A, 27B) aufweist, um das Adapterobjektiv (15) in einer Richtung mit Druck zu beaufschlagen, welche dem Einbauort der Frontlinse des ersten Objektivs (11) entspricht.

4. Haltevorrichtung nach einem der Ansprüche 1 - 3, welche ein bewegbares Teil (27) und Mittel (30A, 30B, 30C) zum Befestigen des Adagterobjektivs (15) am bewegbaren Teil aufweist, wobei das bewegbare Teil verschiebbar angebracht und durch ein elastisches Mittel (27A, 27B) mit Druck in einer Richtung beaufschlagt ist, die dem Einbauort der Frontlinse des ersten Objektivs (11) entspricht.

5. Haltevorrichtung nach Anspruch 4, bei welcher das bewegbare Teil (27) eine Hülse ist, welche das gesamte Adapterobjektiv oder einen Teil desselben aufnimmt.

6. Haltevorrichtung nach einem der Ansprüche 4 und 5, bei welcher das bewegbare Teil (27) auf seiner Rückseite einen Vorsprung oder eine Wulst (29) aufweist, die dazu dient, mit einem vorderen peripheren Teil des ersten Objektivs (11) in Berührung zu kommen derart, dass die rückseitige Linse des Adapterobjektivs (15) und die Frontlinse des ersten Objektivs (11) nicht in Berührung miteinander sind.

7. Haltevorrichtung nach einem der Ansprüche 1 - 6, die einen Lichtleiter (36) aufweist, um Licht von der Vorderseite bis zu einer lichtempfindlichen Zelle (13) der Fotokamera zu leiten.

8. Haltevorrichtung nach einem der Ansprüche 1 - 7, die mit einem Kompass (40) versehen ist, welcher in einer Ebene merklich tiefer als der Bereich der Fixierung des Adapterobjektivs angeordnet ist derart, dass der Kompass in dem unteren Teil einer Aufnahme sichtbar ist, wenn das Adapterobjektiv ein Panorama-Objektiv ist.

9. Haltevorrichtung nach Anspruch 8, bei welcher der Kompass eine Skala (46) mit einer künstlichen Farbe umfasst, die von natürlichen Farben einer Aufnahme im Verlauf einer Bildanalyse durch einen Rechner unterscheidbar ist, mit dem Ziel, den Standort des Kompasses in einem Bild zu finden.

10. Haltevorrichtung nach Anspruch 9, bei welcher der Kompass eine Nadel (44) aufweist, die auf einer ersten Nord- oder Südhälfte eine Farbe aufweist, welche einen größeren Kontrast gegenüber der Farbe der Skala bewirkt, und auf einer zweiten Süd- oder Nordhälfte eine Farbe aufweist, welche etwa gleich ist der Farbe der Skala, um im Verlauf einer Bildanalyse durch den Rechner zum Zwecke des Auffindens der Position der Nadel von der Skala unterscheidbar zu sein.

**11.** Haltevorrichtung nach einem der Ansprüche 8 bis 10, bei welcher der Kompass einen zentralen Bereich mit einer dunklen Farbe (45) aufweist derart, dass die Skala des Kompasses einen farbigen Ring bildet, dessen Gestalt das Auffinden der Skala im Verlauf einer Bildanalyse durch den Rechner zum Zwecke des Feststellens der Position der Skala erleichtert.

**12.** Haltevorrichtung gemäß einem der Ansprüche 8 bis 11, **dadurch gekennzeichnet, dass** sie eine Zunge (50) umfasst, die in einer Ebene angeordnet ist, welche merklich tiefer als der Bereich der Befestigung des Adapterobjektivs (15) angeordnet ist und mit Mitteln (41, 51, 52) versehen ist, um die Zunge entweder in einer sichtbaren Position anzuordnen, in welcher die Zunge im unteren Teil einer Aufnahme erscheint, wenn das Adapterobjektiv ein Panorama-Objektiv ist, oder in einer verdeckten Position, in welcher die Zunge in der Aufnahme nicht erscheint.

**13.** Haltevorrichtung nach Anspruch 12, in welcher die Zunge (50) sich über einer Skala (46) des Kompasses (40) erstreckt und eine Farbe aufweist, welche einen stärkeren Kontrast gegenüber einer Farbe der Skala bietet, um das Auffinden der Zunge im Verlauf einer Bildanalyse mittels Rechner zwecks Feststellen der Lage der Zunge zu erleichtern.

**14.** Haltevorrichtung nach einem der Ansprüche 12 und 13, bei welcher die Zunge (50) um eine Achse (41) rotierbar angebracht ist, welche koaxial zur Rotationsachse (3B) der Haltevorrichtung ist.

**15.** Haltevorrichtung nach einem der Ansprüche 1 bis 14, **dadurch gekennzeichnet, dass** sie eine Komponente zum Eichen von Farben (60) aufweist, welche mit wenigstens drei Farbmustern versehen ist, welche in einer Ebene merklich tiefer als der Bereich der Befestigung des Adapterobjektivs (15) angeordnet ist und im unteren Teil einer Aufnahme sichtbar ist, wenn das Adapterobjektiv ein Panorama-Objektiv ist.

**16.** Haltevorrichtung nach einem der Ansprüche 14 und 15, bei welcher die Komponente zum Eichen von Farben (60) kreisförmig und konzentrisch zur Skala (46) eines Kompasses (40) ist.

**17.** Foto-Bausatz zur Herstellung von Weitwinkelfotografien, **dadurch gekennzeichnet, dass** er umfasst:

- eine Haltevorrichtung für eine Fotokamera gemäß einem der Ansprüche 1 bis 16, die mit einer Rotationsachse versehen ist,
- eine Fotokamera (10), die mit einem ersten Objektiv versehen ist oder versehen werden kann, und
- ein Panorama-Adapterobjektiv (15),

wobei die Haltevorrichtung so angepasst ist, dass die Knotenpunktebene der Frontlinse (16) des Adapterobjektivs im Wesentlichen zur Rotationsachse (3B) der Haltevorrichtung ausgerichtet ist, ohne dass es erforderlich wäre, eine besondere Einstellung oder Korrekturversuche in Bezug auf Parallaxe-Fehler durchzuführen.

**18.** Verfahren zur Herstellung von Weitwinkelfotografien unter Verwendung einer Fotokamera (10), die mit einem ersten Objektiv (11) versehen ist oder versehen werden kann, und unter Verwendung eines Panorama-Adapterobjektivs (15), **dadurch gekennzeichnet, dass** es Schritte umfasst, die darin bestehen, dass

- eine Haltevorrichtung (20, 21) für eine Fotokamera vorgesehen ist, die Mittel (3A, 3B) zum Rotieren um eine Achse, Mittel (23), 12) zum Befestigen der Fotokamera und Mittel (25, 27, 32) zum Befestigen des Adapterobjektivs aufweist, wobei die Mittel zum Befestigen des Adapterobjektivs angeordnet sind, um das Adapterobjektiv zum ersten Objektiv ausgerichtet zu halten, ohne dass es notwendig wäre, das Adapterobjektiv an der Fotokamera zu befestigen,
- dass die Fotokamera an der Haltevorrichtung befestigt wird und
- dass das Adapterobjektiv an der Haltevorrichtung befestigt wird.

**19.** Verfahren nach Anspruch 18, welches einen Schritt umfasst, welcher darin besteht, die Haltevorrichtung mit einem elastischen Rückstellsystem (27, 27A, 27B) zu versehen, um das Adapterobjektiv in einer Richtung mit Druck zu beaufschlagen, welche dem Einbauort der Frontlinse des ersten Objektivs entspricht.

**20.** Verfahren nach einem der Ansprüche 18 und 19, welches einen Schritt umfasst, der darin besteht, die Haltevorrichtung mit einem Lichtleiter (36) zu versehen, um ein vorderseitiges Licht bis zu einer lichtempfindlichen Zelle der Fotokamera zu leiten.

**21.** Verfahren nach einem der Ansprüche 18 bis 20, welches einen Schritt umfasst, der darin besteht, die Haltevorrichtung derart anzupassen, dass die Rotationsachse (3B) der Haltevorrichtung sich im Wesentlichen in der Knotenebene der Frontlinse (16) des Adapterobjektivs befindet.

**22.** Verfahren gemäß einem der Ansprüche 18 bis 21, welches einen Schritt umfasst, der darin besteht, die Haltevorrichtung mit einem Kompass (40) zu versehen, welcher in einer Ebene angeordnet ist, die merklich tiefer liegt als der Bereich der Befestigung des Adapterobjektivs derart, dass sie in dem unteren Teil einer Aufnahme sichtbar ist, wenn das Adapterobjektiv ein Panorama-Objektiv ist.

**23.** Verfahren gemäß einem der Ansprüche 18 bis 22, welches einen Schritt umfasst, welcher darin besteht, die Haltevorrichtung mit einer Zunge (50) zu versehen, welche in einer Ebene angeordnet ist, die merklich tiefer liegt als der Bereich der Befestigung des Adapterobjektivs, wobei Mittel (41, 51, 52) vorgesehen sind, um die Zunge in einer Position anzuordnen, in welcher die Zunge in einem unteren Teil einer Aufnahme erscheint, wenn das Adapterobjektiv ein Panorama-Objektiv ist.

**24.** Verfahren gemäß einem der Ansprüche 18 bis 23, welches einen Schritt umfasst, der darin besteht, die Haltevorrichtung mit einer Komponente für die Eichung von Farben (60) zu versehen, welche wenigstens drei Primärfarben aufweist, wobei die Komponente für die Eichung in einer Ebene angeordnet ist, die merklich tiefer liegt als die Ebene, in welcher das Adapterobjektiv befestigt ist derart, dass es im unteren Teil einer Aufnahme erscheint, wenn das Adapterobjektiv ein Panorama-Objektiv ist.

**Fig. 1**

**Fig. 2**

**Fig. 3**

**Fig. 4**

**Fig. 5**

**Fig. 6**

**Fig. 7**

**Fig. 8**

**FIG. 9**

---

**S1 - Acquisition**

- Photographie panoramique N°1 (183° x 183°) : chargement des points image délivrés par la cellule LCD dans la mémoire Flash de l'appareil (fichier photo N° 1)
- Rotation de l'appareil à 180° dans le plan nodal de la lentille
- Photographie panoramique N°2 (183° x 183°) : chargement des points image délivrés dans la mémoire Flash de l'appareil (fichier photo N° 2)

---

**S2 - Numérisation**
- Transfert des fichiers photo dans un micro-ordinateur
- Stockage en mémoire de masse (optionnel)
- Transfert des points images de la première photographie dans un système d'axes Oxyz en coordonnées sphériques ⟹ Obtention d'une première image en demi-sphère
- Transfert des points images de la première photographie dans le système en coordonnées sphériques ⟹ Obtention d'une deuxième image en demi-sphère

---

**S3 - Formation d'une image panoramique**

- Assemblage des deux demi-sphère images ⟹ Obtention d'une image panoramique sphérique (points image codés RVBA($\varphi,\theta$) dans le repère Oxyz)

- Création d'un ou plusieurs liens avec une ou plusieurs autres images panoramiques en vue d'un visite virtuelle

---

**S4 - Orientation de l'image panoramique**

- Recherche du repère d'orientation (par exemple aiguille boussole ou languette)
- Détermination de l'angle $\theta_N$ entre l'axe Ox et la languette ou le nord
- Mémorisation de $\theta_N$ ou recentrage de l'axe Ox sur le repère d'orientation

---

**S5 - Correction de la teinte**

- Lecture des couleurs primaires dans la zone d'étalonnage de couleurs
- Calcul de la valeur moyenne r, v, b de chaque couleur primaire de la zone d'étalonnage de couleurs
- Calcul du gamma $\gamma r, \gamma v, \gamma b$ de chaque couleur primaire de la zone d'étalonnage
- Correction de gamma appliquée à tous les points de l'image

**Fig. 10A**

**Fig. 10B**

**Fig. 11A**

**Fig. 11B**

100 — Sélection d'une image panoramique de rang i N=i

110 — Chargement de l'image $IP_N$

120 — POS = 0 ?

non    oui

130A — (2)  $\theta pi' = \theta ref - \theta_N$
**Affichage orienté**
Le point au centre de l'écran est :
$RVBA(\varphi_0, \theta pi')$

130B — **Affichage non orienté**
Le point au centre de l'écran est :
$RVBA(\varphi_0, \theta_0)$

140 — Signal d'interactivité détecté ?

oui

non

150 — Glissement du secteur d'image affiché à l'écran d'une valeur de $\pm \varphi i$ ou $\pm \theta i$ selon la valeur du signal d'interactivité

**FIG. 12**

160 — Sélection d'une zone active?

non

oui

170 — (1)  $\theta ref = \theta pi + \theta_N$
Mémorisation de $\theta ref$

180 — Recherche de l'image de rang j correspondant à la zone active sélectionnée
N=j    POSj = 1

34

**Fig. 13**